(19) Europäisches Patentamt / European Patent Office / Office européen des brevets

(11) **EP 2 064 898 B1**

(12) **EUROPÄISCHE PATENTSCHRIFT**

(45) Veröffentlichungstag und Bekanntmachung des Hinweises auf die Patenterteilung:
**11.01.2012 Patentblatt 2012/02**

(51) Int Cl.:
**H04N 17/00** (2006.01)    **G10L 19/00** (2006.01)

(21) Anmeldenummer: **07818341.5**

(22) Anmeldetag: **21.09.2007**

(86) Internationale Anmeldenummer:
**PCT/EP2007/008252**

(87) Internationale Veröffentlichungsnummer:
**WO 2008/034632 (27.03.2008 Gazette 2008/13)**

(54) **VORRICHTUNG ZUM BESTIMMEN VON INFORMATIONEN ZUR ZEITLICHEN AUSRICHTUNG ZWEIER INFORMATIONSSIGNALE**

APPARATUS FOR DETERMINING DATA IN ORDER TO TEMPORALLY ALIGN TWO DATA SIGNALS

DISPOSITIF DE DÉTERMINATION D'INFORMATIONS DESTINÉES À DONNER UNE ORIENTATION TEMPORELLE À DEUX SIGNAUX D'INFORMATIONS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **22.09.2006 DE 102006044929**

(43) Veröffentlichungstag der Anmeldung:
**03.06.2009 Patentblatt 2009/23**

(73) Patentinhaber: **Opticom GmbH**
**91058 Erlangen (DE)**

(72) Erfinder:
• **KEYHL, Michael**
**90562 Heroldsberg (DE)**
• **SCHMIDMER, Christian**
**90491 Nürnberg (DE)**
• **BITTO, Roland**
**90453 Nürnberg (DE)**

(74) Vertreter: **Schenk, Markus et al**
**Schoppe, Zimmermann, Stöckeler & Zinkler**
**Patentanwälte**
**Postfach 246**
**82043 Pullach bei München (DE)**

(56) Entgegenhaltungen:
**EP-A- 1 104 924    US-B1- 6 751 360**

• **RIX A W ET AL: "PESQ - the new ITU standard for end-to-end speech quality assessment" AUDIO ENGINEERING SOCIETY CONVENTION PAPER, NEW YORK, NY, US, 22. September 2000 (2000-09-22), Seiten 1-18, XP002262437**
• **TALLAK S ET AL: "Time delay estimation for objective quality evaluation of low bit-rate coded speech with noisy channel conditions" SIGNALS, SYSTEMS AND COMPUTERS, 1993. 1993 CONFERENCE RECORD OF THE TWENTY-SEVENTH ASILOMAR CONFERENCE ON PACIFIC GROVE, CA, USA 1-3 NOV. 1993, LOS ALAMITOS, CA, USA,IEEE COMPUT. SOC, 1. November 1993 (1993-11-01), Seiten 1216-1219, XP010096209 ISBN: 0-8186-4120-7**

## EP 2 064 898 B1

**Beschreibung**

Die vorliegende Erfindung bezieht sich auf ein Konzept zum Bestimmen von Informationen zur zeitlichen Ausrichtung zweier Informationssignale, insbesondere eines gestörten Informationssignals und eines ungestörten Informationssignals, welches beispielsweise zum Durchführen von so genannten objektiven Messungen zur Qualitätsbeurteilung von Signalen eingesetzt werden kann.

Zur messtechnischen Bewertung der Qualität von codierten Audio- oder Videosignalen werden heute standardisierte perzeptionsbasierte Messverfahren (perceptual measurement) eingesetzt. Bekannte Verfahren sind beispielsweise das so genannte PESQ-Verfahren (PESQ = Perceptual Evaluation of Speech Quality = gehörrichtige Bewertung der Sprachqualität), das in dem Standardisierungsdokument ITU-T P.862 beschrieben ist. Ein anderes bekanntes Messverfahren zur Qualitätsbeurteilung von Audiosignalen ist das so genannte PEAQ-Verfahren (PEAQ = objective measurement of PErceived Audio Quality = objektive Messung der wahrgenommenen Audioqualität) und ist in dem Standardisierungsdokument ITU-RBS.1387-1 dargestellt. Ein Messverfahren zur Beurteilung von Videosignalen ist in A.P. Hekstra et al., "PVQM - A perceptual video quality measure", in Signal Processing: Image Communications, 2002, Vol. 17, pp. 781-798, Elsevier beschrieben.

Diesen Verfahren bzw. weiteren Verfahren zur Qualitätsbeurteilung von Audio- bzw. Videosignalen ist gemeinsam, dass ein zu testendes bzw. zu beurteilendes Signal, das in der Regel das Ausgangssignal eines Systems oder Netzwerks oder allgemein eines zu untersuchenden Elements ist, mit einem Original- oder auch Referenzsignal, das in der Regel das Eingangssignal in das zu untersuchende Element ist, verglichen wird.

Zur Bewertung bzw. Beurteilung eines bestimmten Übertragungsverfahrens bzw. Codierers sind in der Vergangenheit Tests mit Testpersonen durchgeführt worden. Je nach Anwendung handelt es sich dabei beispielsweise um Hörtests zum Testen von gehörangepassten digitalen Codierverfahren bzw. Sehtests zum Testen von digitalen Videocodierverfahren. Obwohl diese Tests im Mittel relativ zuverlässige Ergebnisse liefern, besteht dennoch eine subjektive Komponente. Weiterhin sind solche subjektiven Tests mit einer bestimmten Anzahl von Testpersonen relativ aufwendig und daher relativ teuer. Daher wurden objektive Messverfahren zur Bewertung der Qualität von codierten Sprach-, Audio- oder Videosignalen entwickelt.

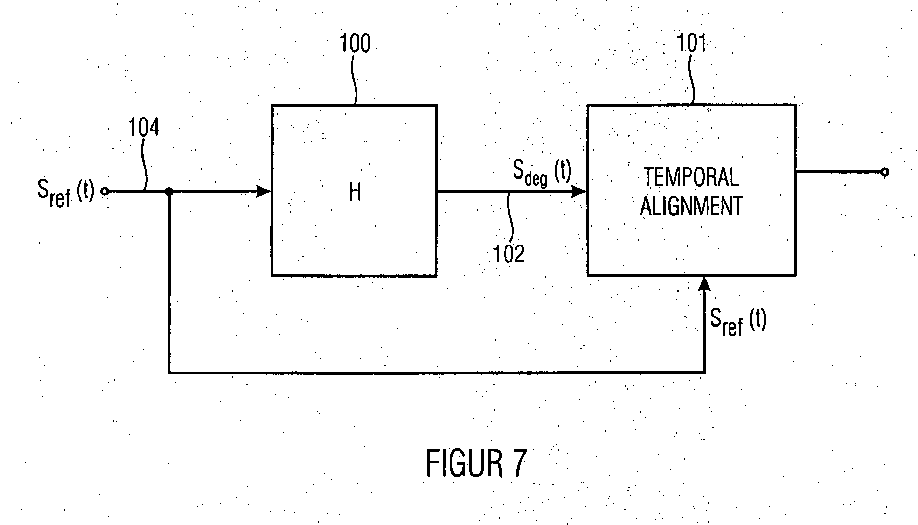

Ein Teil eines Setups eines solchen objektiven Messverfahrens ist in Fig. 7 dargestellt. Das ursprüngliche Signal bzw. das Referenzsignal $S_{ref}(t)$ , 104 wird in ein System 100 mit einer Übertragungscharakteristik H eingespeist. Am Ausgang des Systems 100 wird ein Signal $S_{deg}(t)$, 102 bereitgestellt, das durch das System 100 modifizierte Signaleigenschaften bzw. Merkmale gegenüber dem Originalsignal $s_{ref}(t)$ aufweist. Das erste Informationssignal $s_{deg}(t)$ und das zweite Informationssignal $s_{ref}(t)$ werden einem Block 110 zugeführt, um die beiden Signale zeitlich auszurichten bzw. zeitlich aneinander anzugleichen. Damit kann sichergestellt werden, dass beispielsweise bei Videosignalen nur jene Bilder bzw. Frames miteinander verglichen werden, die zeitlich zueinander korrespondieren. Die zeitliche Ausrichtung oder Reihenfolge der beiden Signale könnte beispielsweise durch eine Verzögerung, einen Frame-Verlust oder Frame-Wiederholung gestört sein. Für eine Qualitätsbeurteilung des gestörten bzw. beeinträchtigten Signals $s_{deg}(t)$ ist es wichtig, dass die zeitliche Ausrichtung an $s_{ref}(t)$ sehr akkurat und exakt ausgeführt wird, da ein anschließender Vergleich von zwei nicht korrespondierenden Frames von $s_{deg}(t)$ und $s_{ref}(t)$ im Allgemeinen zu einer Unterschätzung der Videoqualität des gestörten Signals $s_{deg}(t)$ führt. Eine Korrelation einer solchen objektiven Qualitätsbeurteilung zu einer subjektiven Qualitätsbeurteilung durch beispielsweise menschliche Zuschauer wäre dementsprechend gering.

Moderne Übertragungsverfahren für z. B. Video-, Audio- oder Sprachsignale verändern häufig die zeitliche Struktur der in einem Datenstrom enthaltenen Information. Dies kann zum Teil beabsichtigt sein, häufiger wird dieses Verhalten aber durch Übertragungsstörungen verursacht. Zusätzlich werden die Signale häufig durch Übertragung und Quellkodierung gestört. Zahlreiche Anwendungen z.B. der Messtechnik erfordern einen Vergleich des übertragenen Signals $s_{deg}(t)$ mit dem ungestörten Signal $s_{ref}(t)$. Wie im Vorhergehenden bereits beschrieben wurde, erfordert dieser Vergleich jedoch die korrekte zeitliche Zuordnung der einzelnen Signalabschnitte aus dem ungestörten Signal $s_{ref}(t)$ und dem gestörten Signal $s_{deg}(t)$. Bei geringen Störungen und verhältnismäßig einfach strukturierten Informationsströmen wie z.B. Sprachsignalen können simple Methoden basierend auf einer direkten Kreuzkorrelation der beiden Signale angewandt werden. Bei komplexeren Signalen wie z.B. Videosignalen und starken Störungen, wie sie z.B. im Mobilfunk oder bei Internettelefonie auftreten, sind diese Verfahren nicht zuverlässig anwendbar und zudem äußerst rechenzeitintensiv.

Rix et al., "PESQ - the new ITU standard for end-to-end speech quality assessment" gibt einen Überblick über verschiedene Verfahren zur Qualitätsmessung zu beeinträchtigten Signalen im Vergleich zu einem Originalsignal. Dabei wird erwähnt, dass eine zeitliche Ausrichtung zwischen beeinträchtigtem Signal und Originalsignal notwendig für eine automatisierte Qualitätsanalyse sei. Ferner wird beschrieben, dass beide Signale gefiltert werden und dass darauf eine Zeitverzögerungsschätzung basierend auf einer Einhüllenden stattfinden könne.

Somit besteht die Aufgabe der vorliegenden Erfindung darin, ein verbessertes Konzept zur zeitlichen Zuordnung einzelner Signalabschnitte eines ersten Informationssignals zu einem zweiten Informationssignal zu schaffen.

Diese Aufgabe wird durch eine Vorrichtung zum Bestimmen von Informationen zur zeitlichen Ausrichtung gemäß Patentanspruch 1, ein Verfahren zur Bestimmung von Informationen zur zeitlichen Ausrichtung gemäß Patentanspruch 14 und ein Computer-Programm gemäß Patentanspruch 15 gelöst.

Der vorliegenden Erfindung liegt die Erkenntnis zugrunde, dass eine zeitliche Zuordnung einzelner Signalabschnitte aus einem ersten Informationssignal zu einem zweiten Informationssignal derart erfolgen kann, dass nicht die Informationssignalströme selbst untersucht werden, sondern vielmehr aus den Informationssignalströmen gewonnene Merkmale.

Dazu wird in einem ersten Schritt der erste und der zweite Informationssignalstrom jeweils in Untereinheiten zerlegt.

In einem nächsten Schritt wird jede Untereinheit des ersten und zweiten Informationssignals jeweils durch wenigstens ein Merkmal charakterisiert. Daraus ergeben sich jeweils Merkmalsvektoren, wobei ein Einzelelement eines Merkmalsvektors ein Merkmal einer Untereinheit des Informationssignalstroms darstellt. Die Anzahl der Elemente eines Merkmalsvektors beschreibt die Anzahl der Untereinheiten eines Informationssignalstroms. Dabei kann gemäß Ausführungsbeispielen der vorliegenden Erfindung jede Untereinheit eines Informationssignalstroms durch eine Mehrzahl von Merkmalen charakterisiert werden. Für diesen Fall ergibt sich auch eine Mehrzahl von Merkmalsvektoren, wobei jeder der Merkmalsvektoren ein anderes Merkmal der Mehrzahl von Untereinheiten eines Informationsstroms repräsentiert.

In einem weiteren Schritt wird ein Merkmalsvektor des ersten bzw. gestörten Informationssignals in Suchmuster bzw. Vergleichszeitfenster unterteilt, das mehrere Abtastzeitpunkte bzw. mehrere Teilfolgen von Abtastzeitpunkten des gestörten Informationssignals umfasst. Gemäß einem Ausführungsbeispiel der vorliegenden Erfindung können die Suchmuster bzw. die Vergleichszeitfenster durch Aufteilen des Merkmalsvektors in äquidistante Abschnitte bereitgestellt werden.

In einem weiteren Schritt wird gemäß einem Ausführungsbeispiel der vorliegenden Erfindung eine Ähnlichkeit der Suchmuster bzw. Vergleichszeitfenster des gestörten Informationssignals $s_{deg}$ (t) mit einzelnen Abschnitten eines korrespondierenden Merkmalsvektors des zweiten Informationssignals bzw. des Referenzsignals $s_{ref}$(t) mittels einer Kreuzkorrelation untersucht. Die Position des Maximums der Kreuzkorrelationsfunktion zwischen dem Suchmuster und dem Merkmalsvektor bestimmt die Verschiebung des Suchmusters innerhalb des Merkmalsvektors. Außerdem ist der Wert des Maximums ein Maß für die Übereinstimmung bzw. Ähnlichkeit des Suchmusters und dem entsprechenden Vergleichszeitfenster bzw. Unterraum aus dem Merkmalsvektor des Referenzsignals $s_{ref}$ (t).

Falls eine Suche für ein Suchmuster, welches beispielsweise aus einem bestimmten Merkmalsvektor des gestörten Informationssignals $s_{deg}$(t) gewonnen wurde, nicht erfolgreich ist, kann gemäß einem weiteren Ausführungsbeispiel der vorliegenden Erfindung eine Suche für ein Suchmuster aus einem anderen Merkmalsvektor des gestörten Informationssignals $s_{deg}$(t) wiederholt werden.

Gemäß einer weiteren Ausführungsform der vorliegenden Erfindung kann ein Suchmuster auch aus dem Merkmalsvektor des Referenzsignals $s_{ref}$(t) gebildet werden und dieses Suchmuster in dem Merkmalsvektor des gestörten Informationssignals $s_{deg}$(t) gesucht werden.

Gemäß einem weiteren Ausführungsbeispiel der vorliegenden. Erfindung kann sich der Bestimmung von Informationen zur zeitlichen Ausrichtung des ersten Informationssignals und des zweiten Informationssignals ein weiterer Schritt zur Bestimmung von noch detaillierteren Informationen zur zeitlichen Ausrichtung anschließen, wobei dabei eine zeitliche Ausrichtung innerhalb der Länge eines Suchmusters betrachtet wird. Für die Bestimmung der noch detaillierteren Informationen innerhalb der Länge des Suchmusters können herkömmliche Methoden, wie beispielsweise so genannte Block-Matching-Algorithmen (BMA) oder eine Phasen-Korrelations-Methode herangezogen werden.

Ein Vorteil der vorliegenden Erfindung besteht darin, dass zur zeitlichen Ausrichtung nicht die Informationssignale selbst, sondern vielmehr aus den Informationssignalen gewonnene Merkmale untersucht werden. Das bedeutet für komplexe Informationssignale eine starke Komplexitätsreduktion, wodurch sich ein Vorteil bei der zur Untersuchung notwendigen Rechenzeit erzielen lässt.

Ein weiterer Vorteil der vorliegenden Erfindung besteht darin, dass sich durch die Verwendung von mehreren Merkmalen pro Untereinheit die Zuverlässigkeit des erfindungsgemäßen Konzepts weiter steigern lässt, indem für jede Untereinheit beispielsweise das jeweils geeignetste Merkmal ausgewählt wird. Es kann also eine Steigerung der Genauigkeit erreicht werden, da die Merkmale bzw. die Metainformationen wesentlich spezifischer an eine Aufgabenstellung angepasst werden können, als dies ein direkter Vergleich zweier Informationssignale erlaubt.

Bevorzugte Ausführungsbeispiele der vorliegenden Erfindung werden nachfolgend Bezug nehmend auf die beiliegenden Zeichnungen näher erläutert. Es zeigen:

Fig. 1     eine Vorrichtung zum Bestimmen von Informationen zur zeitlichen Ausrichtung eines ersten Informationssignals und eines zweiten Informationssignals gemäß einem Ausführungsbeispiel der vorliegenden Erfindung;

Fig. 2     eine schematische Darstellung eines Ablaufs zur Extraktion von Merkmalswerten eines Informationssignals gemäß einem Ausführungsbeispiel der vorliegenden Erfindung;

Fig. 3    eine schematische Darstellung zur Erläuterung der Bildung eines Merkmalswertes zu einem Bild- Informationssignal gemäß einem Ausführungsbeispiel der vorliegenden Erfindung;

Fig. 4    eine schematische Darstellung eines Merkmalsverlaufs gemäß einem Ausführungsbeispiel der vorliegenden Erfindung;

Fig. 5    eine Darstellung zur Erläuterung der Bestimmung der Informationen zur zeitlichen Ausrichtung basierend auf einer Kreuzkorrelation zwischen einem ersten und einem zweiten Merkmalsverlauf gemäß einem Ausführungsbeispiel der vorliegenden Erfindung;

Fig. 6    ein Flussdiagramm zur Erläuterung eines Verfahrens zum Bestimmen von Informationen zur zeitlichen Ausrichtung eines ersten Informationssignals und eines zweiten Informationssignals gemäß einem Ausführungsbeispiel der vorliegenden Erfindung; und

Fig. 7    ein Blockdiagramm zur Erläuterung einer vollreferenzbasierten, intrusiven Messung zur Qualitätsbewertung eines beeinträchtigten Signals.

Bezüglich der nachfolgenden Beschreibung sollte beachtet werden, dass bei den unterschiedlichen Ausführungsbeispielen gleich oder gleich wirkende Funktionselemente gleiche Bezugszeichen aufweisen und somit die Beschreibungen dieser Funktionselemente in den verschiedenen in den nachfolgend dargestellten Ausführungsbeispielen untereinander austauschbar sind.

Weiterhin sollte beachtet werden, dass im Nachfolgenden die Bedeutungen von dem ersten Informationssignal und dem zweiten Informationssignal gegeneinander austauschbar sind. Das erste Informationssignal könnte entgegen dem Nachfolgenden also auch das ungestörte Referenzsignal $s_{ref}(t)$ sein, wobei demzufolge das zweite Informationssignal das gestörte Informationssignal $s_{deg}(t)$ wäre.

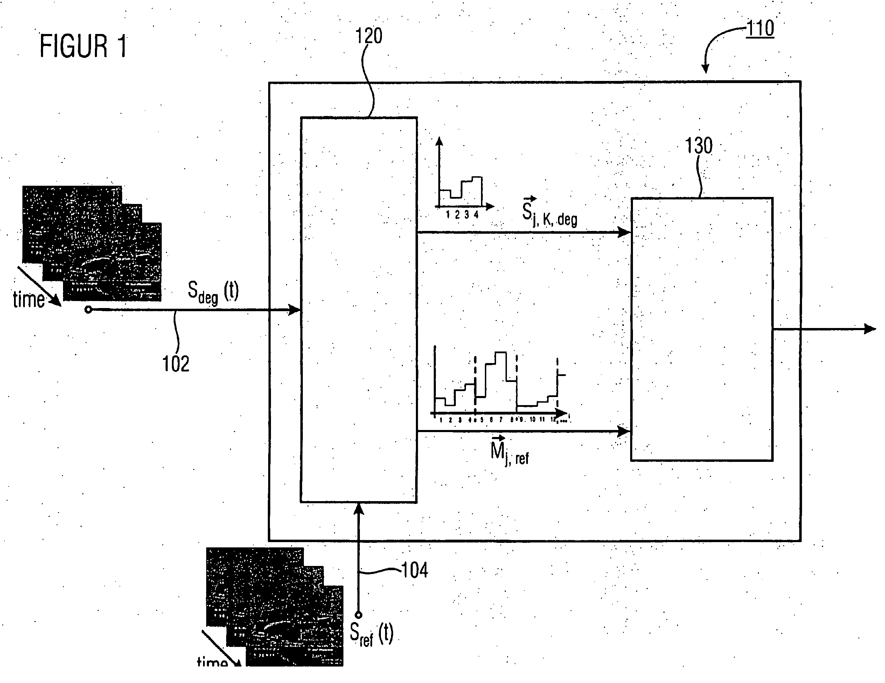

Fig. 1 zeigt eine Vorrichtung 110 zum Bestimmen von Informationen zur zeitlichen Ausrichtung eines ersten Informationssignals $s_{deg}(t)$ 102 und eines zweiten Informationssignals $s_{ref}(t)$ 104 mit einer Merkmalsextraktionseinrichtung 120 und einer Einrichtung 130 zum Bestimmen der Informationen zur zeitlichen Ausrichtung.

Das erste Informationssignal $s_{deg}(t)$ und das zweite Informationssignal $s_{ref}(t)$ werden der Merkmalsextraktionseinrichtung 120 zugeführt, damit die Merkmalsextraktionseinrichtung 120 wenigstens einen Merkmalswert $M_{i,deg}$ pro Abtastzeitpunkt i oder pro Teilfolge i von Abtastzeitpunkten aufeinander folgender Abtastzeitpunkte aus dem ersten Informationssignal $s_{deg}(t)$ innerhalb eines ersten Vergleichszeitfensters, das mehrere Abtastzeitpunkte bzw. Teilfolgen umfasst, bereitstellen kann. Ebenso extrahiert die Merkmalsextraktionseinrichtung 120 wenigstens einen Merkmalswert $M_{i,ref}$ pro Abtastzeitpunkt i oder pro Teilfolge i von Abtastzeitpunkten der aufeinanderfolgenden Abtastzeitpunkte aus dem zweiten Informationssignal $S_{ref}(t)$ innerhalb eines zweiten Vergleichszeitfensters, das mehrere Abtastzeitpunkte bzw. Teilfolgen umfasst.

Gemäß einem Ausführungsbeispiel der vorliegenden Erfindung entspricht das erste Informationssignal $s_{deg}(t)$ einem gestörten Informationssignal und das zweite Informationssignal $s_{ref}(t)$ entspricht einem ungestörten bzw. Referenzinformationssignal. Die Merkmalsextraktionseinrichtung 120 zerlegt also sowohl den ungestörten als auch den gestörten Informationsstrom in Untereinheiten $U_{i,ref}$ und $U_{i,deg}$. Dabei können die Untereinheiten Abtastzeitpunkten oder einer Teilfolge von Abtastzeitpunkten aufeinander folgender Abtastzeitpunkte entsprechen, wobei aufeinander folgende Abtastzeitpunkte jeweils einen oder mehrere Informationswerte aufweisen.

Handelt es sich bei den Informationssignalen beispielsweise um Videosequenzen, so entspricht eine Untereinheit $U_{i,ref}$ beispielsweise dem i-ten Bild des ungestörten Referenzsignals $s_{ref}(t)$, wobei das i-te Bild dem i-ten Abtastzeitpunkt entspricht. Wie im Vorhergehenden bereits beschrieben wurde, könnte eine Untereinheit aber auch eine Mehrzahl von Bildern und damit eine Mehrzahl von Abtastzeitpunkten aufweisen.

Handelt es sich bei den beiden Informationssignalen um Audiosignale (Musik- oder Sprachsignale), so entspricht eine Untereinheit $U_{i,ref}$ beispielsweise einer bestimmten Anzahl von Samples bzw. Abtastwerten des digitalisierten Referenzaudiostroms.

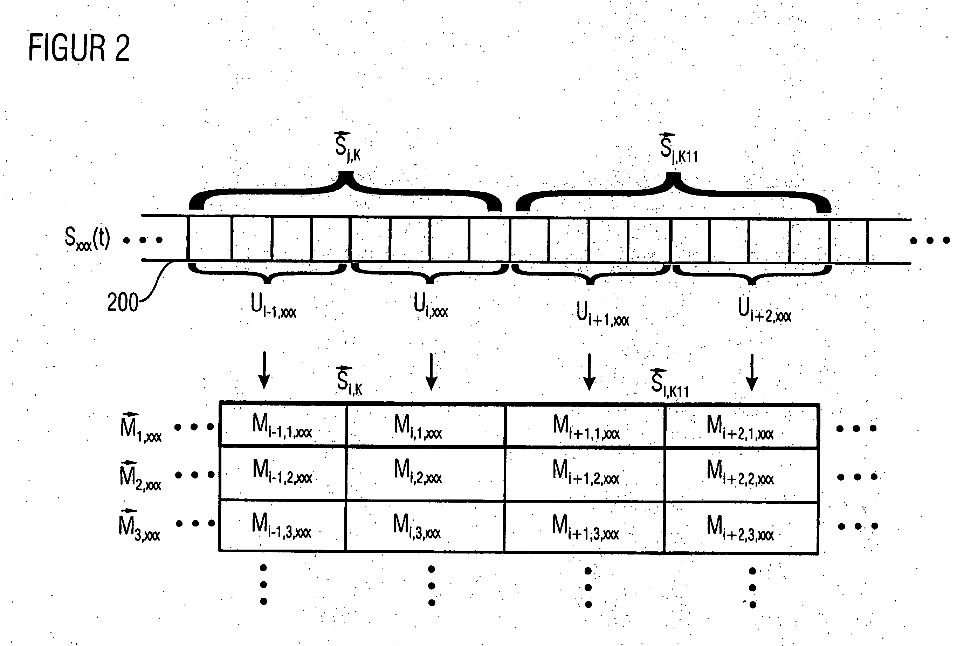

Jede Untereinheit $U_{i,xxx}$ ("xxx" steht für "deg" bzw. "ref") wird nun in der Merkmalsextraktionseinrichtung 120 durch wenigstens ein Merkmal $M_{i,xxx}$ charakterisiert. Gemäß einem Ausführungsbeispiel der vorliegenden Erfindung extrahiert die Merkmalsextraktionseinrichtung 120 für jede Untereinheit $U_{i,xxx}$ des ungestörten bzw. des gestörten Informationsstroms nicht nur ein Merkmal, sondern eine Mehrzahl von Merkmalswerten $M_{i,j,ref}$ bzw. $M_{i,j,deg}$. Dabei bezeichnet der Index j das entsprechende Merkmal der Mehrzahl von Merkmalswerten. Dieser Zusammenhang wird anhand von Fig. 2 näher erläutert.

Dazu zeigt Fig. 2 schematisch einen Ausschnitt 200 eines der beiden Informationssignale $s_{deg}(t)$ bzw. $s_{ref}(t)$, der mit $s_{xxx}(t)$ gekennzeichnet ist. Das Informationssignal $s_{xxx}(t)$ ist in eine Mehrzahl von Untereinheiten $U_{i,xxx}$ zerlegt. Dabei entspricht eine Untereinheit $U_{i,xxx}$ jeweils einem Abtastzeitpunkt i oder aber einer Teilfolge i von Abtastzeitpunkten, wobei aufeinanderfolgende Abtastzeitpunkte jeweils einen oder mehrere Informationswerte aufweisen.

Entspricht eine in Fig. 2 dargestellte Untereinheit $U_{i,xxx}$ also jeweils einem Abtastzeitpunkt, so weist ein Abtastzeitpunkt in dem in Fig. 2 dargestellten Szenario jeweils vier Informationswerte auf. Entspricht hingegen jeder der in Fig. 2 gezeigten Informationswerte genau einem Abtastzeitpunkt, so entspricht einem Unterabschnitt $U_{i,xxx}$ eine Teilfolge von jeweils vier Abtastzeitpunkten in dem in Fig. 2 dargestellten Szenario. Es sei bemerkt, dass Fig. 2 nur der Verdeutlichung des erfindungsgemäßen Konzepts dient und daher sehr vereinfacht dargestellt ist. Bei realen Anwendungen, wie beispielsweise der Qualitätsbeurteilung von Videosignalen, wird ein Informationssignal für einen Abtastzeitpunkt eine Vielzahl von Informationswerten aufweisen, die beispielsweise zur Darstellung eines Bildes notwendig sind.

Wie im Vorhergehenden bereits beschrieben wurde, können den einzelnen Untereinheiten $U_{i,xxx}$ jeweils einen oder einer Mehrzahl von Merkmalswerten $M_{i,j,xxx}$ zugeordnet werden. Dabei bezeichnet der Index i die entsprechende Untereinheit und der Index j bezeichnet das entsprechende Merkmal.

Gemäß einem Ausführungsbeispiel der vorliegenden Erfindung kann ein Merkmal beispielsweise die gesamte in der Untereinheit $U_{i,xxx}$ enthaltene Energie sein. Besitzt eine Untereinheit $U_{i,xxx}$ also beispielsweise N Informationswerte, die jeweils eine Energie $E_{i,n,xxx}$ (n = 1, ..., N) aufweisen, so lässt sich die Gesamtenergie pro Untereinheit i gemäß

$$E_{i,xxx} = \sum_{n=1}^{N} E_{i,n,xxx}$$

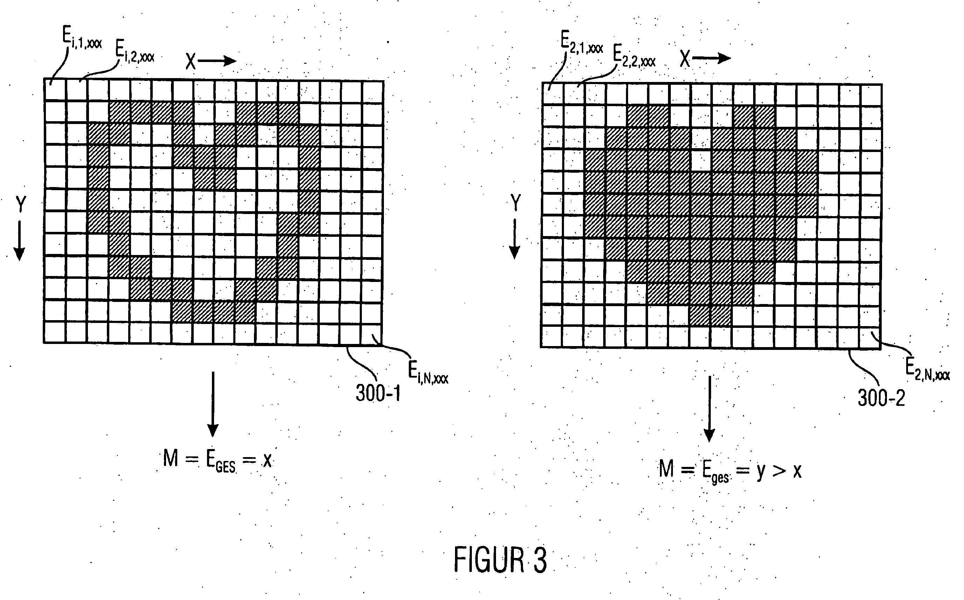

bestimmen, wobei "xxx" für "deg" bzw. "ref" steht. Die gesamte Energie kann natürlich noch in eine "gemittelte" Form gebracht werden, indem sie beispielsweise durch die Anzahl N der beitragenden Informationswerte geteilt wird. Statt der Energie kann natürlich auch bei Videos die Helligkeit, die Farbe, eine Farbkomponente, ein Kontrast, eine Sättigung oder dergleichen verwendet werden. In diesem Fall umfassen die *N* beitragenden Informationswerte gegebenenfalls auch nicht alle Pixel der Videobilder sondern nur einen Teil derselben, wie z.B. einen zusammenhängenden Bereich, wie z.B. einen rechteckigen Bereich. Diese Vorgehensweise wird exemplarisch für die Helligkeit anhand von Fig. 3 schematisch gezeigt.

Fig. 3 zeigt beispielhaft eine Darstellung von zwei digitalisierten Bildern 300-1 und 300-2, wobei die einzelnen Informationswerte der beiden Bilder nur jeweils einen Wert von 0 oder 1 (0 = weiß, 1 = schwarz) annehmen können. Wird als Merkmal bzw. Metainformation nicht das jeweilige Bild i selbst, sondern jeweils die darin enthaltene Gesamthelligkeit $E_{i,xxx}$ - in gemittelter oder nicht gemittelter Form - verwendet, so wird sich für die Gesamthelligkeit $E_{1,xxx}$ des Bildes 300-1 ein vergleichsweise geringerer Wert ergeben als für die Gesamthelligkeit $E_{2,xxx}$ des Bildes 300-2. Somit können die beiden Bilder 300-1 und 300-2 eindeutig anhand der Gesamthelligkeit $E_{i,xxx}$ ihrer Informationswerte unterschieden werden, wobei in Fig. 3 exemplarisch helle Pixel dunkel dargestellt sind und umgekehrt dunkle Pixel weiß.

Gemäß weiteren Ausführungsbeispielen der vorliegenden Erfindung können Merkmale $M_{i,j,xxx}$ auch beispielsweise ein Anteil an Bewegung in einem Bildbereich, Farbwerte, Kontrastwerte, Helligkeitswerte oder eine Energie in einem bestimmten spektralen Bereich usw. sein. Die jeweiligen Merkmalswerte $M_{i,j,xxx}$ können für sämtliche Untereinheiten $U_{i,ref}$ bzw. $U_{i,deg}$ in Merkmalsvektoren $\mathbf{M}_{i,ref} = [M_{i,1,ref}, M_{i,2,ref}, ..., M_{i,J,ref}]^T$ bzw. $\mathbf{M}_{j,ref} = [M_{i,j,ref}, M_{2,j,ref}, ..., M_{I,j,ref}]^T$ und $\mathbf{M}_{i,deg} = [M_{i,I,deg}, M_{i,2,deg}, ..., M_{i,J,deg}]^T$ bzw. $\mathbf{M}_{j,deg} = [M_{1,j,deg}, M_{2,j,deg}, ..., M_{I,j,deg}]^T$ zusammengefasst werden, wobei J die Anzahl von unterschiedlichen Merkmalswerten pro Untereinheit $U_{i,xxx}$ und I der Anzahl von Untereinheiten $U_{i,xxx}$ Bedeutet. Grundsätzlich gilt, dass die Merkmalsvektoren $\mathbf{M}_{i,xxx}$ bzw. $\mathbf{M}_{j,xxx}$ wesentlich weniger Informationen enthalten als die gesamten Daten der Untereinheiten $U_{i,xxx}$. Die Merkmalsvektoren $\mathbf{M}_{i,xxx}$ und $\mathbf{M}_{j,xxx}$ können auch zu einer Merkmalsmatrix $\mathbf{M}_{xxx}$ zusammengefasst werden, wie es in Fig. 2 angedeutet ist.

Ein Merkmalsvektor $\mathbf{M}_{j,xxx}$ wird in einem nächsten Schritt in Vergleichszeitfenster bzw. Suchmuster $S_{j,k,xxx}$ unterteilt, wobei der Index k mehrere Untereinheiten $U_{i,xxx}$ umfassen kann. In der in Fig. 2 gezeigten beispielhaften Darstellung umfasst ein Vergleichszeitfenster bzw. ein Suchmuster $S_{j,k,xxx}$ jeweils zwei Untereinheiten $U_{i,xxx}$. Diese Darstellung ist allerdings lediglich exemplarisch und die tatsächlich verwendete Anzahl von Untereinheiten $U_{i,xxx}$ pro Vergleichszeitfenster $S_{j,k,xxx}$ kann im Allgemeinen beliebig gewählt werden. Eine optimale Länge der Suchmuster $S_{j,k,xxx}$ hängt von der einzelnen Anwendung und der Eignung der Merkmalsvektoren ab. Eine Möglichkeit zum Erhalt der Vergleichszeitfenster bzw. der Suchmuster $S_{j,k,xxx}$ besteht darin, einen Merkmalsvektor $\mathbf{M}_{j,deg}$ des gestörten Informationssignals in äquidistante Abschnitte aufzuteilen, so wie es in Fig. 2 exemplarisch gezeigt ist. Gemäß einem alternativen Ausführungsbeispiel der vorliegenden Erfindung kann aber auch eine Aufteilung in unterschiedliche große nicht äquidistante Suchmuster vorgenommen werden. Die Suchmuster müssen dabei auch nicht direkt aneinandergrenzen bzw. aufeinanderfolgen sondern können sich auch überlappen. Die Aufteilung kann durch adaptive Anpassung vorgenommen werden. Insbesondere kann der Merkmalsvektor $\mathbf{M}_{j,xxx}$ auch iterativ geteilt werden, um ein Suchmuster $S_{j,k,xxx}$ zu erhalten.

Wie im Vorhergehenden bereits beschrieben wurde, ist gemäß einem Ausführungsbeispiel der vorliegenden Erfindung ein Suchmuster bzw. ein Vergleichszeitfenster $S_{j,k,deg}$ ein Teil bzw. ein Unterraum eines Merkmalsvektors $M_{j,deg}$. Dieses Suchmuster wird gemäß einem Ausführungsbeispiel der vorliegenden Erfindung im Merkmalsvektor $M_{j,ref}$ gesucht. Gemäß einem Ausführungsbeispiel der vorliegenden Erfindung kann zur eigentlichen Suche die Kreuzkorrelationsfunktion (KKF) eingesetzt werden. Die diskrete Kreuzkorrelationsfunktion zweier zeitdiskreter Signale x[k] und y[k]

$$\phi_{xy} = E\{x[k]y^{\bullet}[k-\lambda]\}$$

ist im Allgemeinen ein Maß für Ähnlichkeit der beiden Signale x[k] und y[k] für eine zeitliche Verschiebung $\lambda$, wobei $\lambda$ zeitliche Verschiebung in Abtastwerten bedeutet. Weist ein Suchmuster bzw. ein Vergleichszeitfenster $S_{j,k,xxx}$ eine Länge L auf, d.h. umfasst es L Untereinheiten $U_{i,xxx}$, und erfolgt eine Unterteilung äquidistant, so setzt sich das Suchmuster aus folgenden Merkmalswerten zusammen:

$$S_{j,k,xxx} = [M_{kL,j,xxx}, \ldots, M_{(k+1)L-1,j,xxx}]^T$$

Falls zur eigentlichen Suche die Kreuzkorrelationsfunktion

$$KKF(M_{j,ref}, S_{j,k,deg}, \lambda) = \sum_{i=kL}^{(k+1)L-1} M_{i,j,deg} M_{i-\lambda,j,ref}^{\bullet}$$

eingesetzt wird, dann kann eine Identifikation von Diskontinuitäten im Verlauf des gestörten Signals $s_{deg}(t)$ durch eine Analyse multipler Maxima der KKF($M_{j,ref}$,$S_{j,k,deg}$,$\lambda$) erfolgen. Falls die KKF also mehr als ein Maximum an verschiedenen zeitlichen Verschiebungen $\lambda$ aufweist, dann liegt mit hoher Wahrscheinlichkeit eine Diskontinuität des gestörten Signals $s_{deg}(t)$ innerhalb des Vergleichszeitfensters bzw. des Suchmusters $S_{j,k,deg}$ vor, da ein Teil von $S_{j,k,deg}$ an einer Position $\lambda_1$ des ersten und ein weiterer Teil an der Position $\lambda_2$ des zweiten Maximums der KKF gefunden wurde. Des Weiteren kann eine Identifikation von Diskontinuitäten im Verlauf des gestörten Signals $s_{deg}(t)$ durch eine Analyse des Werts des Maximums der Kreuzkorrelationsfunktion KKF ($M_{j,ref}$,$S_{j,k,deg}$, $\lambda$) oder des Betrages der Kreuzkorrelationsfunktion KKF ($M_{j,ref}$,$S_{j,k,deg}$,$\lambda$) stattfinden. In diesen Fällen wird gemäß einem Ausführungsbeispiel der vorliegenden Erfindung das Suchmuster $S_{j,k,deg}$ vorteilhaft weiter unterteilt, wobei $S_{j,k,deg}$ bevorzugt zwischen $\lambda_1$ und $\lambda_2$ geteilt wird. Daraus resultiert ein iteratives Teilen der Suchfunktion. Dabei ist jedoch zu bemerken, dass, wenn die Länge L der Suchmuster $S_{j,k,xxx}$ eine bestimmte minimale Größe unterschreitet, die Suche nicht mehr erfolgreich durchgeführt werden kann. In diesem Moment ist die Suche aber bereits so weit eingeschränkt, dass klassische Verfahren wie z.B. Block-Matching oder Phasen-Korrelation wieder mit vertretbarem Aufwand angewandt werden können.

Handelt es sich bei den Informationssignalen $s_{xxx}(t)$ um Videosignale, so ist ein Suchmuster $S_{j,k,xxx}$ beispielsweise eine Sequenz aus mehreren Einzelbildern. Eine Diskontinuität ist z.B. das Fehlen eines oder mehrerer Bilder aufgrund von Übertragungsstörungen. Die im Vorhergehenden beschriebenen iterative Aufteilungsmethode des Merkmalsvektors $M_{j,xxx}$ in Suchmuster $S_{j,k,xxx}$ führt dazu, dass $S_{j,k,xxx}$ aus einem Abschnitt vor einer Diskontinuität besteht, während $S_{j,k+1,xxx}$ aus einem dahinter liegenden Abschnitt besteht.

Handelt es sich bei den Informationssignalen $s_{xxx}(t)$ um Audio- bzw. Sprachsignale, so ist ein Suchmuster $S_{j,k,xxx}$ beispielsweise eine Sequenz aus Untereinheiten $U_{i,xxx}$. Eine Diskontinuität ist beispielsweise das Fehlen einer oder mehrerer Untereinheiten $U_{i,xxx}$ aufgrund von Übertragungsstörungen. Die beschriebene iterative Aufteilungsmethoden führen dazu, dass $S_{j,k,xxx}$ aus dem Abschnitt vor einer Diskontinuität besteht, während $S_{j,k+l,xxx}$ aus dem dahinter liegenden Abschnitt besteht.

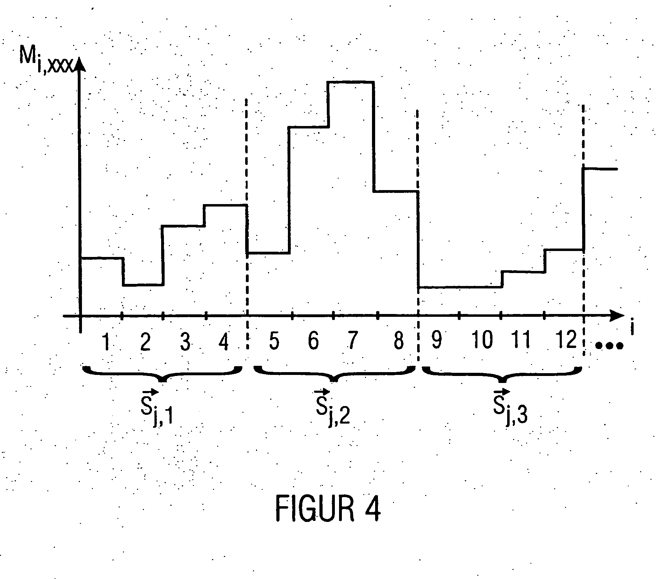

Zur näheren Erläuterung des Aufteilens eines Merkmalsvektors $M_{j,xxx}$ in Suchmuster $S_{j,k,xxx}$ zeigt Fig. 4 schematisch einen Verlauf von Merkmalswerten $M_{i,j,xxx}$ für aufeinander folgende Unterabschnitte $U_{i,xxx}$.

Fig. 4 zeigt einen Verlauf von Merkmalswerten von zwölf aufeinander folgenden Untereinheiten $U_{i,xxx}$ (i = 1, ..., 12), wobei die Untereinheiten $U_{i,xxx}$ einen Abtastzeitpunkt oder eine Teilfolge von Abtastzeitpunkten bedeuten. Die einzelnen in Fig. 4 gezeigten Merkmalswerte werden in einem Merkmalsvektor $M_{j,xxx}$ für Merkmal j zusammengefasst. In dem in Fig. 4 beispielhaft dargestellten Szenario wird der Merkmalsvektor $M_{j,xxx}$ in äquidistante Abschnitte von jeweils vier Untereinheiten unterteilt, um drei vergleichszeitfenster bzw. Suchmuster $S_{j,k,xxx}$ zu erhalten, die jeweils vier Untereinheiten umfassen, d.h. L=4. Es sei bemerkt, dass Fig. 4 lediglich eine beispielhafte Darstellung ist, und dass eine Unterteilung eines Merkmalsvektors $\mathbf{M}_{j,xxx}$ im Allgemeinen auch anders erfolgen kann.

Handelt es sich beispielsweise bei den Informationssignalen um Videosignale, bei den Merkmalswerten $M_{i,j,xxx}$ um die Gesamtenergie eines Bildes bzw. Frames pro Abtastzeitpunkt i, so umfassen die drei in Fig. 4 gezeigten Suchmuster $\mathbf{S}_{j,k,xxx}$ jeweils einen Gesamtenergieverlauf von vier aufeinander folgenden Frames. Wie im Vorhergehenden bereits beschrieben wurde, kann nun eine zeitliche Position bzw. zeitliche Ausrichtung der vier aufeinander folgenden Frames bzw. eines Suchmusters $\mathbf{S}_{j,k,deg}$ bezogen auf den Merkmalsvektor $\mathbf{M}_{j,ref}$ des Referenzsignals $s_{ref}(t)$ mittels der Kreuzkorrelationsfunktion KKF($\mathbf{M}_{j,ref}$,$\mathbf{S}_{j,k,deg}$,$\lambda$) gefunden werden. Dies stellt also eine grobe zeitliche Ausrichtung von jeweils vier Frames bzw. vier Untereinheiten dar. Umfasst ein Suchmuster im Allgemeinen L Untereinheiten, so findet natürlich eine grobe zeitliche Ausrichtung von L Untereinheiten statt.

Die Kreuzkorrelationsfunktion KKF ($\mathbf{M}_{j,ref}$,$\mathbf{S}_{j,k,deg}$, $\lambda$) ist dabei nur ein Maß für die Ähnlichkeit der einzelnen Unterräume der Merkmalsvektoren $\mathbf{M}_{j,xxx}$ und kann beispielsweise auch durch andere Verfahren ersetzt werden. Ein weiteres Maß für eine Ähnlichkeit der einzelnen Unterräume der Merkmalsvektoren ist gemäß weiteren Ausführungsbeispielen der vorliegenden Erfindung beispielsweise das mittlere Fehlerquadrat. Dementsprechend kann eine grobe zeitliche Ausrichtung auch mit der Methode des kleinsten mittleren quadratischen Fehlers (MMSE = Minimum Mean Squared Error) durchgeführt werden.

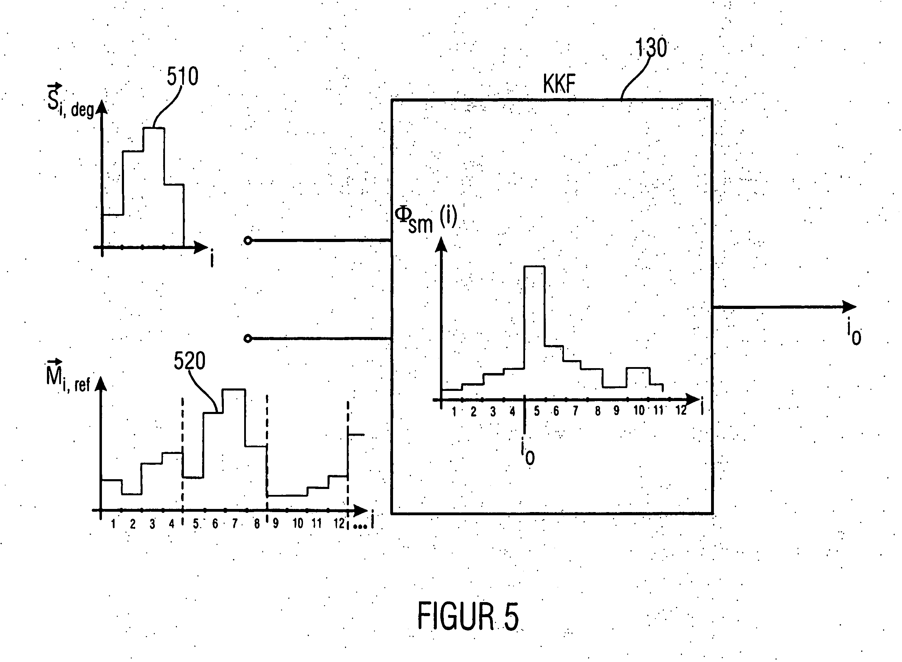

Wird die Kreuzkorrelationsfunktion KKF($\mathbf{M}_{i,ref}$,$\mathbf{S}_{j,k,deg}$,$\lambda$) als Ähnlichkeitsmaß herangezogen, so bestimmt die Position des Maximums der Kreuzkorrelationsfunktion die Verschiebung des Suchmuster $\mathbf{S}_{j,k,deg}$ innerhalb des Merkmalsvektors $\mathbf{M}_{j,ref}$. Der Wert des Maximums der Kreuzkorrelationsfunktion KKF($\mathbf{M}_{j,ref}$,$\mathbf{S}_{j,k,deg}$,$\lambda$) ist dabei ein Maß für die Übereinstimmung von $\mathbf{S}_{j,k,deg}$ und dem entsprechenden Unterraum aus $\mathbf{M}_{j,ref}$. Dieser Zusammenhang ist schematisch in Fig. 5 dargestellt.

Fig. 5 zeigt eine Einrichtung 130 zum Bestimmen der Informationen zur zeitlichen Ausrichtung basierend auf Ähnlichkeiten zwischen einem ersten 510 und einem zweiten 520 Merkmalsverlauf gemäß einem Ausführungsbeispiel der vorliegenden Erfindung.

Der erste Merkmalsverlauf 510 entspricht dabei einem Suchmuster $\mathbf{S}_{j,k,deg}$, also einem Ausschnitt aus dem Merkmalsvektor $\mathbf{M}_{j,deg}$. Der zweite Merkmalsverlauf 520 entspricht dem Merkmalsvektor $\mathbf{M}_{j,ref}$ des j-ten Merkmals des Referenzinformationssignals $s_{ref}(t)$. Die beiden Merkmalsverläufe 510 und 520 werden der Einrichtung 130 zum Bestimmen der Informationen zur zeitlichen Ausrichtung zugeführt. Gemäß einem Ausführungsbeispiel der vorliegenden Erfindung benutzt die Einrichtung 130 zum Bestimmen der Informationen zur zeitlichen Ausrichtung die Kreuzkorrelationsfunktion KKF($\mathbf{M}_{j,ref}$,$\mathbf{S}_{j,k,deg}$,$\lambda$) der beiden Merkmalsverläufe 510 und 520 als Maß für die Ähnlichkeit zwischen den beiden Merkmalsverläufen 510 und 520 bzw. $\mathbf{S}_{j,k,deg}$ und $\mathbf{M}_{j,ref}$.

Wie es in Fig. 5 schematisch angedeutet ist, kann die Kreuzkorrelationsfunktion der beiden Merkmalsverläufe 510 und 520 bzw. $\mathbf{S}_{j,k,deg}$ und $\mathbf{M}_{j,ref}$ ein Maximum liefern, dessen Position die zeitliche Verschiebung des Suchmusters $\mathbf{S}_{j,k,deg}$ innerhalb des Merkmalsvektors $\mathbf{M}_{j,ref}$ bestimmt. Weiterhin ist der Betrag des Maximums der Kreuzkorrelationsfunktion ein Maß für die Übereinstimmung des Suchmusters $\mathbf{S}_{j,k,deg}$ und dem entsprechenden Unterraum des Merkmalsvektors $\mathbf{M}_{j,ref}$. Ein großer Betrag des Maximums bedeutet also eine sehr gute Übereinstimmung, wohingegen ein eher kleiner Wert des Maximums auf eine weniger gute Übereinstimmung und damit eine gewisse Unsicherheit hindeutet.

Falls die Suche für ein Suchmuster $\mathbf{S}_{j,k,deg}$, das aus dem Merkmalsvektor $\mathbf{M}_{j,deg}$ gewonnen wurde, nicht erfolgreich ist, d.h. beispielsweise der Betrag des Maximums der Kreuzkorrelationsfunktion KKF($\mathbf{M}_{j,ref}$,$\mathbf{S}_{j,k,deg}$,$\lambda$) für Merkmal j zu gering ist, dann wird gemäß einem Ausführungsbeispiel der vorliegenden Erfindung die Suche erneut für ein weiteres Merkmal j' wiederholt, sofern jede Untereinheit i durch eine Mehrzahl von Merkmalen charakterisiert wurde. Es wird also $\mathbf{S}_{j',k,deg}$ in $\mathbf{M}_{j',ref}$ gesucht.

Gemäß weiteren Ausführungsbeispielen der vorliegenden Erfindung kann natürlich auch das Suchmuster 510 aus dem Merkmalsvektor $\mathbf{M}_{j,ref}$ des Referenzsignals gebildet werden, d.h. $\mathbf{S}_{j,k,ref}$, und in dem Merkmalsvektor $\mathbf{M}_{j,deg}$ des gestörten Signals $s_{deg}(t)$ gesucht werden.

Gemäß einem weiteren Ausführungsbeispiel der vorliegenden Erfindung kann die Merkmalsextraktionseinrichtung 120 ein Merkmal aus einer Mehrzahl von Merkmalen extrahieren, so dass das Merkmal Merkmalseigenschaften aufweist, die im Vergleich zu Merkmalseigenschaften anderer Merkmale auf einen erhöhten Sucherfolg bei der Suche nach einem Suchmuster $\mathbf{S}_{j,k,xxx}$ aus einem des ersten und zweiten Merkmalsverlaufs bzw. Merkmalsvektors $\mathbf{M}_{j,xxx}$ des Merkmals hinweisen. Dazu kann die Merkmalsextraktionseinrichtung 120 angepasst sein, um als Merkmalseigenschaft beispielsweise ein Streuungsmaß des Merkmals $M_{j,xxx}$ bzw. des Merkmalsvektors $\mathbf{M}_{j,xxx}$ zu bestimmen. Gängige Beispiele für Streuungsmaße sind dabei z.B. die Varianz oder die Standardabweichung, wobei auch andere Streuungsmaße denkbar sind.

Weist ein Merkmalsverlauf bzw. Merkmalsvektor $\mathbf{M}_{j,xxx}$ eine vergleichsweise hohe Streubreite um seinen Mittelwert auf, so kann dies als Indiz dafür gesehen werden, das eine Suche für ein Suchmuster $\mathbf{S}_{j,k,xxx}$, das aus dem Merkmalsvektor $\mathbf{M}_{j,xxx}$ gewonnen wurde, mit erhöhter Wahrscheinlichkeit erfolgreicher verlaufen wird als eine Suche nach einem Suchmuster $\mathbf{S'}_{j,k,xxx}$, das aus einem anderen Merkmalsvektor $\mathbf{M'}_{j,xxx}$ gewonnen wurde, der eine geringere Streubreite um seinen Mittelwert aufweist.

Durch das Hinzuziehen von mehreren Merkmalen zur Bestimmung von Informationen zur zeitlichen Ausrichtung des ersten Informationssignals und des zweiten Informationssignals können die Informationen zur zeitlichen Ausrichtung effizient und zügig bestimmt werden. Dabei kann die Wahrscheinlichkeit, ein Ergebnis zu erhalten, gegenüber der Verwendung nur eines vorbestimmten Merkmals zur Bestimmung der Informationen zur zeitlichen Ausrichtung deutlich erhöht werden.

Beispielsweise könnte eine Suche nach einem Suchmuster $S_{j,k+l,deg}$ derart erfolgen, dass die Suche für dasjenige Merkmal j gestartet wird, für das die Suche nachdem zeitlich vorhergehenden Suchmuster $S_{j,k,deg}$ erfolgreich war bzw. die höchsten Korrelationswerte geliefert hat. Dabei geht man davon aus, dass sich zwischen zwei zeitlich aufeinander folgenden Suchmustern bzw. Vergleichszeiträumen $S_{j,x,xxx}$, $S_{j,k+1,xxx}$ die statistischen Merkmalseigenschaften eines Merkmals wenig bis gar nicht ändern und das Merkmal j seine Aussagekraft bzw. Sucherfolgswahrscheinlichkeit beibehält. Bei der Betrachtung von weiter auseinander liegenden Vergleichszeiträumen $S_{j,k,xxx}$, $S_{j,k+\Delta k,xxx}$ ist diese Annahme unter Umständen nicht mehr gerechtfertigt, so dass sich Merkmale, die die besten Sucherfolge versprechen, abhängig vom Zeitindex k des Vergleichszeitraums ändern können.

Allgemein bedeutet das, dass für aufeinander folgende Suchmuster bzw. Vergleichszeiträume auch unterschiedliche Merkmale zur Gewinnung eines Merkmalsverlaufs verwendet werden können

Wie im Vorhergehenden bereits erwähnt wurde, dient das Verfahren zum Bestimmen von Informationen zur zeitlichen Ausrichtung eines ersten Informationssignals und eines zweiten Informationssignals gemäß Ausführungsbeispielen der vorliegenden Erfindung für eine zeitliche Grobsuche, wobei die zeitliche Auflösung von der Länge L der Suchmuster $S_{j,k,xxx}$ abhängt. Für eine feinere zeitliche Ausrichtung innerhalb der Länge L des Suchmusters $S_{j,k,xxx}$ können beispielsweise herkömmliche Methoden wie z.B. Block-Matching-Algorithmen oder Phasen-Korrelation mit vertretbarem Aufwand eingesetzt werden.

Wurde nach dem erfindungsgemäßen Konzept eine zeitliche Ausrichtung sämtlicher Suchmuster bzw. Ver-gleichszeitfenster $S_{j,k,xxx}$ zwischen dem gestörten und dem ungestörten Signal durchgeführt, stehen als Ergebnis Informationen zur Verfügung, die benötigt werden, um die zeitliche Struktur des übertragenen bzw. gestörten Signals $s_{deg}$(t) wieder an die Struktur des originalen bzw. ungestörten Signals $s_{ref}$(t) anzupassen. Als Nebeneffekt kann diese zeitliche Information gemäß Ausführungsbeispielen der vorliegenden Erfindung auch zur Beurteilung der Übertragungsqualität eingesetzt werden. Wird durch das erfindungsgemäße Verfahren nämlich festgestellt, dass das übertragene bzw. gestörte Signal $s_{deg}$(t) nur wenig verzögert ist oder wenige Fehlstellen aufweist, so kann in diesem Fall davon ausgegangen werden, dass eine Übertragungsqualität relativ gut war. Weist ein übertragenes Signal $s_{deg}$(t) hingegen eine große Verzögerungszeit auf oder fehlen entsprechend viele Signalfragmente, d.h. treten viele Diskontinuitäten auf, so deutet dies auf eine relativ schlechte Übertragungsqualität hin.

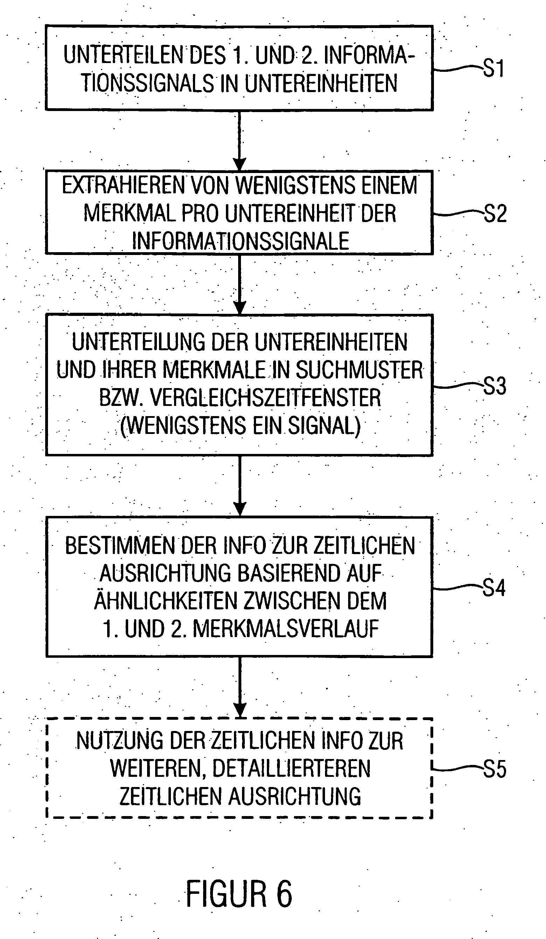

Zusammenfassend zeigt Fig. 6 schematisch ein Flussdiagramm eines Verfahrens zum Bestimmen von Informationen zur zeitlichen Ausrichtung eines ersten Informationssignals und eines zweiten Informationssignals, welches gemäß einem Ausführungsbeispiel der vorliegenden Erfindung in der Vorrichtung 110 zum Bestimmen von Informationen abläuft.

Das in Fig. 6 dargestellte Flussdiagramm umfasst einen ersten Schritt S1, einen darauf folgenden Schritt S2, einen weiteren Schritt S3, einen Schritt S4 und einen optionalen Schritt S5.

Bei dem gezeigten Verfahren zum Bestimmen von Informationen zur zeitlichen Ausrichtung wird gemäß einem Ausführungsbeispiel der vorliegenden Erfindung in dem ersten Schritt S1 das erste und das zweite Informationssignal bzw. das gestörte $s_{deg}$(t) und das ungestörte Informationssignal $s_{ref}$(t) jeweils in Untereinheiten $U_{i,xxx}$ unterteilt, wobei die Untereinheiten Abtastzeitpunkten i oder Teilfolgen i von Abtastzeitpunkten entsprechen.

In dem zweiten Schritt S2 wird jede Untereinheit $U_{i,xxx}$ durch wenigstens ein Merkmal $M_{i,j,xxx}$ charakterisiert. Jeder Untereinheit $U_{i,xxx}$ des ersten und des zweiten Informationssignals wird also ein Merkmal oder eine Mehrzahl von j Merkmalen zugeordnet. Dabei werden die resultierenden Merkmalssätze in Merkmalsvektoren $M_{i,xxx}$ bzw. $M_{j,xxx}$ zu-sammengefasst. Ein Merkmalsvektor $M_{j,xxx}$ umfasst also beispielsweise jeweils ein charakteristisches Merkmal j für sämtliche Untereinheiten $U_{i,xxx}$ des ersten bzw. des zweiten Informationssignals.

In dem dritten Schritt S3 wird nun ein Merkmalsvektor $M_{j,xxx}$ bzw. die Mehrzahl von Merkmalsvektoren $M_{xxx}$ zu wenigstens einem der beiden Informationssignale in Suchmuster bzw. Vergleichszeitfenster $S_{j,k,xxx}$ aufgeteilt. Dabei umfasst ein Vergleichszeitfenster $S_{j,k,xxx}$ beispielsweise mehrere Abtastzeitpunkte i bzw. Teilfolgen i von Abtastzeitpunkten.

In dem darauf folgenden Schritt S4 werden die einzelnen Suchmuster $S_{j,k,xxx}$ des einen Informationssignals dann in dem entsprechenden Merkmalsvektor $M_{j,xxx}$ des anderen Informationssignals gesucht, um eine Information zur zeitlichen Ausrichtung basierend auf Ähnlichkeiten zwischen dem ersten und dem zweiten Merkmalsverlauf zu erhalten. Dazu kann beispielsweise eine Kreuzkorrelationsfunktion zwischen den beiden Merkmalsverläufen verwendet werden, wie im Vorhergehenden bereits beschrieben wurde.

Nachdem Schritt S4 eine Information zur zeitlichen Ausrichtung basierend auf Ähnlichkeiten zwischen dem ersten $S_{j,k,xxx}$ und dem zweiten Merkmalsverlauf $M_{j,xxx}$ geliefert hat, kann in einem optionalen Schritt S5 diese zeitliche Information genutzt werden, um die beiden Informationssignale weiter, d.h. detaillierter, zeitlich aneinander auszurichten.

Dies kann dann beispielsweise mittels herkömmlicher Verfahren wie z. B. Block-Matching oder Phasen-Korrelation geschehen, dann jedoch mit dem Vorteil, dass die Ausrichtung detaillierter lediglich innerhalb eines Verschiebebereiches zwischen dem Suchmuster bzw. dem Merkmalsverlauf des ersten bzw. zweiten Informationssignals entsprechenden Teil des ersten und zweiten Informationssignals durchgeführt werden muss, der in einem vorbestimmten Bereich um den in Schritt S4 erhaltenen Verschiebewert $\lambda$ liegt. Die detaillierte Ausrichtung in Schritt S5 basiert dabei beispielsweise auf Auffinden von Ähnlichkeiten zwischen den Informationswerten der beiden zueinander auszurichtenden Informationssignale, wie z.B. den Pixelwerten der jeweiligen Bilder, oder zumindest einem Teil der Informationswerte pro Untereinheit $U_{i,xxx}$, wie z. B. einem Frame, wobei der Teil dann vorzugsweise ein größeres Datenvolumen einnimmt als der Merkmalswert $M_{i,j,xxx}$ pro Untereinheit $U_{i,xxx}$. Beispielsweise wird die Fehlerquadratsumme zwischen den Videosequenzen der Suchmuster bzw. des Merkmalsverlaufs für bildweise Verschiebungen um den groben Verschiebewert $\lambda$ aus dem Schritt S4 heraus bestimmt, und der feinere Verschiebewert als derjenige Wert bestimmt, der zu dem geringsten Fehlerquadrat führt. Dabei kann der grobe Verschiebewert $\lambda$ beispielsweise eine Granularität von zwei Frames, entsprechend Untereinheiten $U_{i,xxx}$ und Merkmalen $M_{i,j,xxx}$ aus zwei Frames, aufweisen, wohingegen der feinere Verschiebewert beispielsweise eine Granularität von einem Frame aufweist.

Gemäß weiteren Ausführungsformen der vorliegenden Erfindung können in dem in Fig. 6 schematisch gezeigten Verfahren auch einzelne Schritte entfallen bzw. optional sein. Beispielsweise ist Schritt S1 dann optional, wenn sich eine Einteilung in Untereinheiten $U_{i,xxx}$ schon inhärent aus der Signalstruktur von $s_{deg}$ (t) bzw. $s_{ref}$ (t) ergibt, wie es beispielsweise bei Videosequenzen der Fall sein kann, wo den Untereinheiten, $U_{i,xxx}$ jeweils einzelne Frames bzw. Bilder entsprechen. Auch Schritt S3 kann gemäß Ausführungsformen der vorliegenden Erfindung wegfallen, wenn beispielsweise die Merkmalsvektoren $M_{j,deg}$ und $M_{j,ref}$ direkt miteinander korreliert werden, um eine zeitliche Verschiebung $\lambda$ zwischen $M_{j,deg}$ und $M_{j,ref}$ festzustellen, bzw. $M_{j,deg}$ und $M_{j,ref}$ iterativ geteilt werden, um geeignete Suchmuster $S_{j,k,xxx}$ zu erhalten, wie es im Vorhergehenden bereits beschrieben wurde.

Das erfindungsgemäße Konzept kann also eingesetzt werden, um eine Suche nach ähnlichen Abschnitten aus einem gestörten $s_{deg}$(t) und einem ungestörten Datenstrom $s_{ref}$(t) in zwei Phasen aufzuteilen. In der ersten Phase, einer Grobsuche, werden nicht die Datenströme selbst untersucht, sondern vielmehr aus den Datenströmen gewonnene Merkmale $M_{i,j,xxx}$. Durch die damit verbundene Komplexitätsreduktion lässt sich ein großer Vorteil bei der notwendigen Rechenzeit erzielen. Die Zuverlässigkeit lässt sich zudem weiter steigern, indem nicht nur ein Merkmal verwendet wird, sondern vielmehr eine Mehrzahl von Merkmalen und indem für jeden Abschnitt das jeweils geeignetste Merkmal ausgewählt wird. Nachdem auf diese Weise der Suchbereich deutlich eingeschränkt werden kann, kann dann in der zweiten Phase eine Feinsuche erfolgen, bei der herkömmliche Verfahren wie z.B. Block-Matching oder Phasenkorrelation verwendet werden können. Da der Suchbereich in der zweiten Phase jetzt jedoch klein ist, ist die benötigte Rechenzeit dafür weniger kritisch.

Lediglich vorsichtshalber wird darauf hingewiesen, dass die vorhergehenden Ausführungsbeispiele lediglich des einfacheren Verständnisses halber von einem ungestörten Referenzsignal $S_{ref}$(t) und einem gestörten Signal $S_{deg}$ (t) als zueinander auszurichtende Signale ausgingen. Die Ausrichtung zweier gestörter oder zweier ungestörter Informationssignale ist aber ebenfalls möglich. Ferner können, wie im vorhergehenden bereits erwähnt, verschiedene Merkmale zur Verwendung bei der Grobausrichtung herangezogen werden, wie z.B. die (Band)Energie in dem Fall eines Audiosignals und die Helligkeit, die Farbe, der Kontrast oder Kanteninformationen, d.h. Informationen über den hochfrequenten Anteil des Bildes, in dem Fall eines Videosignals. Diese Merkmale können in dem Fall eines Videosignals über den gesamten Bildbereich hinweg gewonnen werden oder nur über einen oder mehrere Ausschnitte hinweg, wobei sich wiederum in dem Fall der ausschnittweisen Gewinnung und der Extraktion mehrerer Merkmale die Extraktionsausschnitte verschiedener Merkmale unterschiedlich sein können. Ferner bildeten die in dem Zusammenhang mit der Grobausrichtung genannten Möglichkeiten für ein Ahnlichkeitsmaß, nämlich die Kreuzkorrelation und der RMSE, nur exemplarische Beispiele für die Ähnlichkeitssuche und es existieren natürlich andere Möglichkeiten, wie z.B. SDA-(squared absolute difference) Methoden. Ähnliches gilt für die Feinausrichtung. Die in dem Zusammenhang mit der Feinausrichtung genannten Möglichkeiten für ein Ähnlichkeitsmaß, nämlich das Block-Matching und die Phasenkorrelation, stellen ebenfalls nur exemplarische Beispiele neben anderen Möglichkeiten dar, wie z.B. SDA-(squared absolute difference) Methoden. Ferner wird lediglich vorsichtshalber darauf hingewiesen, dass unter dem Begriff "Audiosignal" alle Signale verstanden werden sollen, die akustische Informationen betreffen, also nicht nur Musikstücke sondern ferner auch Sprachsingale.

Gemäß Ausführungsbeispielen der vorliegenden Erfindung ist die Zielsetzung der vorliegenden Erfindung, nicht aus einem beliebigen Signal eine genau definierte zeitliche Struktur zu erzeugen, sondern es geht vielmehr darum, die zeitliche Struktur eines gestörten Signals $s_{deg}$(t) an die Struktur eines originalen, ungestörten Signals $s_{ref}$(t) anzupassen, also quasi den originalen Zustand wiederherzustellen. In der Technik sind hierzu Verfahren bekannt, die allesamt großen Einschränkungen unterworfen sind, da sie entweder in Gegenwart von starken Störungen versagen oder nur auf bestimmte Signale angewandt werden können. Hinzu kommt, dass bei bekannten Verfahren der Rechenaufwand prohibitiv hoch ist. Der fundamentale Unterschied zwischen bekannten und dem erfindungsgemäßen Konzept ist der Übergang von einer Analyse der eigentlichen Signalinformationen (große Datenmenge) zu einer Analyse von Metainformationen (Merkmalsvektoren, geringe Datenmenge). Mit der dadurch verbundenen Reduktion des Rechenaufwandes geht auch eine Steigerung der Genauigkeit einher, da die Metainformationen wesentlich spezifischer an die Aufgabenstellung angepasst werden können, als dies ein direkter Vergleich zweier Informationsblöcke erlaubt.

Anders ausgedrückt schaffen die Ausführungsbeispiele also ein Verfahren, welches geeignet ist zur Zuordnung von ähnlichen Abschnitten zweier oder mehrerer Informationsströme, selbst bei diskontinuierlichem Verlauf der Informationsströme. Die Informationsströme werden in Abschnitte unterteilt, wobei jeder Abschnitt durch eines oder mehrere Merkmale beschrieben werden kann. Dies bedingt eine Reduktion der Information, die zur späteren Analyse notwendig ist. Die Abschnitte des einen Informationsstroms werden in dem nicht unterteilten Merkmalsvektor des anderen Informationsstroms mit Hilfe einer Ähnlichkeitsanalyse zur Grobsuche gesucht. Dabei kann eines oder mehrere Merkmale zur Suche eingesetzt werden. Alternativ dazu kann gemäß einem Ausführungsbeispiel der vorliegenden Erfindung eine Aufteilung auch für beide Merkmalsvektoren beider Informationsströme in Abschnitte erfolgen. Wurde mit der Ähnlichkeitsanalyse der Merkmalsvektoren eine zeitliche Zuordnung der beiden Informationsströme erzielt, können herkömmliche Methoden zur Feinsuche bzw. zur feinen zeitliche Zuordnung der Informationsströme herangezogen werden.

Gemäß Ausführungsbeispielen der vorliegenden Erfindung kann die Information über die Veränderung der zeitlichen Zuordnung durch die Übertragung zur Beurteilung der Qualität der Übertragung angewendet werden. Hervorzuheben ist dabei, dass das erfindungsgemäße Konzept unabhängig von der Art der Information ist. Die Suche nach ähnlichen Datenstromabschnitten erfolgt nicht anhand der Daten selbst, sondern über die Analyse von aus den Daten gewonnenen Metainformationen bzw. Merkmalen.

Abhängig von den Gegebenheiten kann das erfindungsgemäße Verfahren zum Bestimmen der Informationen zur zeitlichen Ausrichtung eines ersten Informationssignals und eines zweiten Informationssignals in Hardware oder in Software implementiert werden. Die Implementierung kann auf einem digitalen Speichermedium, insbesondere einer Diskette oder CD mit elektronisch auslesbaren Steuersignalen erfolgen, die so mit einem programmierbaren Computersystem zusammenwirken können, dass das Verfahren ausgeführt wird. Allgemein besteht die Erfindung somit auch in einem Computer-Programm-Produkt mit einem auf einem maschinenlesbaren Träger gespeicherten Programmcode zur Durchführung des erfindungsgemäßen Verfahrens, wenn das Computer-Programm-Produkt auf einem Rechner abläuft. In anderen Worten ausgedrückt kann die Erfindung somit als ein Computer-Programm mit einem Programmcode zur Durchführung des Verfahrens zum Bestimmen von Informationen zur zeitlichen Ausrichtung eines ersten Informationssignals und eines zweiten Informationssignals realisiert werden, wenn das Computer-Programm auf einem Computer abläuft.

## Patentansprüche

1. Vorrichtung (110) zum Bestimmen von Informationen zur zeitlichen Ausrichtung eines ersten Informationssignals ($s_{deg}(t)$) und eines zweiten Informationssignals ($s_{ref}(t)$), die für aufeinander folgende Abtastzeitpunkte jeweils einen oder mehrere Informationswerte aufweisen, mit
   einer Merkmalsextraktionseinrichtung (120) zum Extrahieren von Merkmalen ($M_{i,j,deg}$) einer Mehrzahl von Merkmalen pro Abtastzeitpunkt oder pro Teilfolge von Abtastzeitpunkten der aufeinander folgenden Abtastzeitpunkte aus dem ersten Informationssignal ($s_{deg}(t)$), um pro Merkmal einen ersten Merkmalsverlauf ($\mathbf{M}_{j,deg}$) zu erhalten, welcher in eine Folge von Vergleichszeitfenstern unterteilt ist, und zum Extrahieren der Merkmale ($M_{i,j,ref}$) pro Abtastzeitpunkt oder pro Teilfolge von Abtastzeitpunkten der aufeinander folgenden Abtastzeitpunkte aus dem zweiten Informationssignal ($s_{ref}(t)$), um pro Merkmal einen zweiten Merkmalsverlauf ($\mathbf{M}_{j,ref}$) zu erhalten,
   wobei die Merkmalsextraktionseinrichtung (120) ausgebildet ist, um pro Vergleichszeitfenster ein Merkmal mit erhöhter Sucherfolgswahrscheinlichkeit aus den Merkmalen auszuwählen, das Merkmalseigenschaften aufweist, die im Vergleich zu Merkmalseigenschaften der anderen Merkmale auf eine erhöhte Sucherfolgswahrscheinlichkeit bei der Suche nach dem ersten Merkmalsverlauf ($\mathbf{M}_{j,deg}$; $\mathbf{M}_{j,ref}$) in dem jeweiligen Vergleichszeitfenster in dem zweiten Merkmalsverlauf hinweisen, und zwar mit entweder einer Streubreite des Merkmals oder ein Betrag eines Maximums eines Ähnlichkeitsmaßes zwischen dem ersten und zweiten Merkmalsverlauf des Merkmals als ein Maß für die Sucherfolgswahrscheinlichkeit des jeweiligen Merkmals; und
   einer Einrichtung (130) zum Bestimmen der Informationen zur zeitlichen Ausrichtung basierend auf Ähnlichkeiten zwischen dem ersten ($\mathbf{M}_{j,deg}$) und dem zweiten Merkmalsverlauf ($\mathbf{M}_{j,ref}$) des Merkmals mit erhöhter Sucherfolgswahrscheinlichkeit durch eine Suche nach dem ersten Merkmalsverlauf des Merkmals mit erhöhter Sucherfolgswahrscheinlichkeit in jedem der Mehrzahl von Vergleichzeitfenstern in dem zweiten Merkmalsverlauf des Merkmals mit erhöhter Sucherfolgswahrscheinlichkeit.

2. Vorrichtung gemäß Anspruch 1, bei der die Merkmalsextraktionseinrichtung (120) angepasst ist, um als Streuungsmaß für die Streubreite die Varianz oder die Standardabweichung zu verwenden.

3. Vorrichtung gemäß Anspruch 1 , bei der die Merkmalsextraktionseinrichtung ausgebildet ist, eine Korrelationsfunktion als des Ähnlichkeitsmaβ zu verwenden.

4. Vorrichtung gemäß einem der vorhergehenden Ansprüche, wobei das erste ($s_{deg}$(t)) und das zweite Informationssignal ($s_{ref}$(t)) jeweils ein digitales Videosignal ist, das als die Mehrzahl von Informationswerten pro Abtastzeitpunkt die Pixelwerte eines Videobilds aufweist, und wobei jedes der Mehrzahl von Merkmalen ($M_{i,j,deg}$; $M_{i,j,ref}$) jeweils einem Anteil an Bewegung eines Bildbereichs zwischen zwei aufeinander folgenden Videobildern oder Helligkeits-, Farb-, Kontrast- oder Kanteninformationen in einem Bildausschnitt oder über die vollständigen Videobilder hinweg entspricht.

5. Vorrichtung gemäß einem der vorhergehenden Ansprüche, wobei die Merkmalsextraktionseinrichtung (120) derart ausgebildet ist, dass eine Gesamtheit der Mehrzahl von Merkmalen ($M_{i,j,deg}$; $M_{i,j,ref}$) pro Abtastzeitpunkt oder pro Teilfolge von Abtastzeitpunkten weniger umfangreich ist als eine Gesamtheit der Informationswerte des ersten ($s_{deg}$(t)) bzw. des zweiten Informationssignals ($s_{ref}$(t)) pro Abtastzeitpunkt bzw. pro Teilfolge von Abtastzeitpunkten, aus denen dieselben extrahiert sind.

6. Vorrichtung gemäß einem der vorhergehenden Ansprüche, wobei die Einrichtung (130) zum Bestimmen der Informationen zur zeitlichen Ausrichtung ausgebildet ist, um die Ähnlichkeiten zwischen dem ersten ($\mathbf{M}_{j,deg}$; $\mathbf{S}_{j,k,deg}$) und dem zweiten Merkmalsverlauf ($\mathbf{M}_{j,ref}$; $\mathbf{S}_{j,k,ref}$) des Merkmals mit erhöhter Sucherfolgswahrscheinlichkeit mittels einer Korrelationsfunktion zwischen dem ersten und dem zweiten Merkmalsverlauf des Merkmals mit erhöhter Sucherfolgswahrscheinlichkeit zu bestimmen.

7. Vorrichtung gemäß Anspruch 6, bei der eine Position des Maximums der Korrelationsfunktion zwischen dem ersten ($\mathbf{M}_{j,deg}$; $\mathbf{S}_{j,k,deg}$) und dem zweiten Merkmalsverlauf ($\mathbf{M}_{j,ref}$; $\mathbf{S}_{j,k,ref}$) des Merkmals mit erhöhter Sucherfolgswahrscheinlichkeit eine zeitliche Verschiebung der beiden Merkmalsverläufe zueinander bedeutet.

8. Vorrichtung gemäß einem der Ansprüche 6 oder 7, wobei die Einrichtung (130) zum Bestimmen der Informationen zur zeitlichen Ausrichtung ausgebildet ist, um eine Diskontinuität des ersten ($\mathbf{M}_{j,deg}$; $\mathbf{S}_{j,k,deg}$) bzw. des zweiten Merkmalsverlaufs ($\mathbf{M}_{j,ref}$; $\mathbf{S}_{j,k,ref}$) des Merkmals mit erhöhter Sucherfolgswahrscheinlichkeit durch ein Auftreten multipler Maxima der Korrelationsfunktion zwischen dem ersten und dem zweiten Merkmalsverlauf des Merkmals mit erhöhter Sucherfolgswahrscheinlichkeit zu ermitteln, wobei eine Diskontinuität einem Fehlen von Informationswerten des ersten relativ zu dem zweiten Informationssignal, oder umgekehrt, zwischen zwei aufeinander folgenden Abtastzeitpunkten entspricht.

9. Vorrichtung gemäß einem der Ansprüche 6 oder 7, wobei die Einrichtung (130) zum Bestimmen der Informationen zur zeitlichen Ausrichtung ausgebildet ist, um eine Diskontinuität des ersten ($\mathbf{M}_{j,deg}$; $\mathbf{S}_{j,k,deg}$) bzw. des zweiten Merkmalsverlaufs ($\mathbf{M}_{j,ref}$; $\mathbf{S}_{j,k,ref}$) des Merkmals mit erhöhter Sucherfolgswahrscheinlichkeit durch den Wert des Maximums der Korrelationsfunktion oder des Betrages der Korrelationsfunktion zwischen dem ersten und dem zweiten Merkmalsverlauf des Merkmals mit erhöhter Sucherfolgswahrscheinlichkeit zu ermitteln, wobei eine Diskontinuität einem Fehlen von Informationswerten des ersten relativ zu dem zweiten Informationssignal, oder umgekehrt, zwischen zwei aufeinander folgenden Abtastzeitpunkten entspricht.

10. Vorrichtung gemäß Anspruch 8 oder 9 wobei die Einrichtung (130) zum Bestimmen der Informationen zur zeitlichen Ausrichtung ferner ausgebildet ist, das den ersten Merkmalsverlauf des Merkmals mit erhöhter Sucherfolgswahrscheinlichkeit in dem jeweiligen Vergleichzeitfenster ($\mathbf{M}_{j,deg}$; $\mathbf{S}_{j,k,deg}$) an der Stelle der ermittelten Diskontinuität in jeweils zwei kleinere Vergleichzeitfenster aufzuteilen und erneut eine Ausrichtung bzgl. der kleineren Vergleichzeitfenster durchzuführen.

11. Vorrichtung gemäß einem der vorhergehenden Ansprüche, die ferner folgendes Merkmal aufweist:

   eine Einrichtung zur detaillierteren zeitlichen Ausrichtung des ersten ($s_{deg}$(t)) und des zweiten ($s_{ref}$(t)) Informationssignals innerhalb des jeweiligen Vergleichzeitfensters ($\mathbf{S}_{j,k,deg}$) basierend auf der Information zur zeitlichen Ausrichtung basierend auf Ähnlichkeiten zwischen dem ersten ($\mathbf{M}_{j,deg}$) und dem zweiten Merkmalsverlauf ($\mathbf{M}_{j,ref}$) des Merkmals mit erhöhter Sucherfolgswahrscheinlichkeit.

12. Vorrichtung gemäß Anspruch 11, wobei die Einrichtung zur detaillierteren zeitlichen Ausrichtung ausgebildet ist, eine detailliertere zeitliche Ausrichtung mittels Block-Matching- oder SAD-Algorithmen oder Korrelations-Algorithmen oder mittels Phasen-Korrelation innerhalb eines Zeitraums durchzuführen, der durch die Information zur zeitlichen Ausrichtung vorgegeben ist.

13. Vorrichtung gemäß einem der vorhergehenden Ansprüche, die fermer folgendes Merkmal aufweist: eine Beteilings-einrichtung zur Beurteilung einer Übertragungsqualität einer Übertragung zwischen dem ersten ($s_{deg}$(t)) und dem zweiten Informationssignal ($s_{ref}$ (t)) basierend auf der Information zur zeitlichen Ausrichtung.

14. In Hardware oder Software implementiertes Verfahren zum Bestimmen von Informationen zur zeitlichen Ausrichtung eines ersten Informationssignals ($S_{deg}$(t)) und eines zweiten Informationssignals ($_{Sref}$(t)), die für aufeinander folgende Abtastzeitpunkte jeweils einen oder mehrere Informationswerte aufweisen, mit folgenden Schritten:

Extrahieren von Merkmalen ($M_{i,j,deg}$) einer Mehrzahl von Merkmalen pro Abtastzeitpunkt oder pro Teilfolge von Abtastzeitpunkten der aufeinander folgenden Abtastzeitpunkte aus dem ersten Informationssignal ($S_{deg}$(t)) , um pro Merkmal einen ersten Merkmalsverlauf ($M_{j,deg}$) zu erhalten, welcher in eine Folge von Vergleichszeitfenstern unterteilt ist, und zum Extrahieren der Merkmale ($M_{i,j,ref}$) pro Abtastzeitpunkt oder pro Teilfolge von Abtastzeitpunkten der aufeinander folgenden Abtastzeitpunkte aus dem zweiten Informationssignal ($S_{ref}$(t)), um pro Merkmal einen zweiten Merkmalsverlauf ($M_{j,ref}$) zu erhalten,
pro Vergleichszeitfenster, Auswählen eines Merkmals mit erhöhter Sucherfolgswahrscheinlichkeit aus den Merkmalen, das Merkmalseigenschaften aufweist, die im Vergleich zu Merkmalseigenschaften der anderen Merkmale auf einen erhöhten Sucherfolgswahrscheinlichkeit bei der Suche nach dem ersten Merkmalsverlauf ($M_{j,deg;}$ $M_{j,ref}$) in dem jeweiligen Vergleichszeitfenster in dem zweiten Merkmalsverlauf hinweisen, und zwar mit einer Streubreite des Merkmals oder ein Betrag eines Maximums eines Ähnlichkeitsmaßes zwischen dem ersten und zweiten Merkmalsverlauf des Merkmals als ein Maß für die Sucherfolgswahrscheinlichkeit des jeweiligen Merkmals verwendet wird; und
Bestimmen der Informationen zur zeitlichen Ausrichtung basierend auf Ähnlichkeiten zwischen dem ersten ($M_{j,deg}$) und dem zweiten Merkmalsverlauf ($M_{j,ref}$) des Merkmals mit erhöhter Sucherfolgswahrscheinlichkeit für das jeweilige Vergleichszeitfenster durch Suche nach ersten Merkmalsverlauf ($M_{j,deg:}$ $M_{j,ref}$) des Merkmals mit erhöhter Sucherfolgswahrscheinlichkeit in jedem der Mehrzahl von Vergleichzeitfenstern in dem zweiten Merkmalsverlauf des Merkmals mit erhöhter Sucherfolgswahrscheinlichkeit.

15. Computer-Programm mit einem Programmcode zum Durchführen des Verfahrens zum Bestimmen von Informationen zur zeitlichen Ausrichtung eines ersten Informationssignals und eines zweiten Informationssignals gemäß Patentanspruch 14, wenn das Computer-Programm auf einem Computer abläuft.

**Claims**

1. Apparatus (110) for determining information in order to temporally align a first information signal ($S_{deg}$(t)) and a second information signal ($S_{ref}$(t)), each of which comprises one or several information values for successive sampling times, the apparatus comprising
a characteristic extraction means (120) for extracting characteristics ($M_{i,j,deg}$) of a plurality of characteristics per sampling time or per subsequence of sampling times of the successive sampling times from the first information signal ($S_{deg}$(t)) so as to obtain, for each characteristic, a first characteristic curve ($M_{j,deg}$) which is subdivided into a sequence of comparison time windows, and for extracting the characteristics ($M_{i,j,ref}$) per sampling time or per subsequence of sampling times of the successive sampling times from the second information signal ($S_{ref}$(t)) so as to obtain, for each characteristic, a second characteristic curve ($M_{j,ref}$),
the characteristic extraction means (120) being configured to select, for each comparison time window, from the characteristics a characteristic having increased likelihood of a successful search which comprises characteristic properties which by comparison with characteristic properties of the other characteristics indicate an increased likelihood of a successful search in the search for the first characteristic curve ($M_{j,deg}$; $M_{j,ref}$) within the respective comparison time window in the second characteristic curve, specifically with either a spread range of the characteristic or a magnitude of a maximum of a measure of similarity between the first and second characteristic curves as a measure of the likelihood of a successful search of the respective characteristic; and
a means (130) for determining the information for temporal alignment on the basis of similarities between the first ($M_{j,deg}$) and second ($M_{j,ref}$) characteristic curves of the characteristic having increased likelihood of a successful search by means of a search for the first characteristic curve of the characteristic having increased likelihood of a successful search within each of the plurality of comparison time windows in the second characteristic curve of the characteristic having increased likelihood of a successful search.

2.  Apparatus as claimed in claim 1, wherein the characteristic extraction means (120) is adapted to utilize the variance or the standard deviation as a spread measure of the spread width.

3.  Apparatus as claimed in claim 1, wherein the characteristic extraction means (120) is configured to utilize a correlation function as the similarity measure.

4.  Apparatus as claimed in any of the previous claims, wherein the first ($S_{deg}(t)$) and second ($S_{ref}(t)$) information signals each are a digital video signal comprising the pixel values of a video image as the plurality of information values per sampling time, and wherein each of the plurality of characteristics ($M_{i,j,deg}$; $M_{i,j,ref}$) respectively corresponds to a share in movement of an image area between two successive video images or brightness, color, contrast, or edge information within an image section or across the complete video images.

5.  Apparatus as claimed in any of the previous claims, wherein the characteristic extraction means (120) is configured such that a totality of the plurality of characteristics ($M_{i,j,deg}$; $M_{i,j,ref}$) per sampling time or per subsequence of sampling times is less comprehensive than a totality of the information values of the first ($S_{deg}(t)$) and second ($S_{ref}(t)$) information signals, respectively, per sampling time or per subsequence of sampling times from which same are extracted.

6.  Apparatus as claimed in any of the previous claims, wherein the means (130) for determining the information for temporal alignment is configured to determine the similarities between the first ($M_{j,deg}$; $S_{j,k,deg}$) and second ($M_{j,ref}$; $S_{j,k,ref}$) characteristic curves of the characteristic having increased likelihood of a successful search by means of a correlation function between the first and second characteristic curves of the characteristic having increased likelihood of a successful search.

7.  Apparatus as claimed in claim 6, wherein a position of the maximum of the correlation function between the first ($M_{j,deg}$; $S_{j,kdeg}$) and second ($M_{j,ref}$; $S_{j,k,ref}$) characteristic curves of the characteristic having increased likelihood of a successful search indicates a mutual temporal shift of the two characteristic curves.

8.  Apparatus as claimed in one of claims 6 or 7, wherein the means (130) for determining the information for temporal alignment is configured to determine a discontinuity of the first ($M_{j,deg}$; $S_{j,k,deg}$) or second ($M_{j,ref}$; $S_{j,k,ref}$) characteristic curves of the characteristic having increased likelihood of a successful search by means of an occurrence of multiple maxima of the correlation function between the first and second characteristic curves of the characteristic having increased likelihood of a successful search, a discontinuity corresponding to a lack of information values of the first information signal relative to the second information signal, or vice versa, between two successive sampling times.

9.  Apparatus as claimed in one of claims 6 or 7, wherein the means (130) for determining the information for temporal alignment is configured to determine a discontinuity of the first ($Mj_{,deg}$; $S_{j,k,deg}$) or second ($M_{j,ref}$; $Sj_{,k,ref}$) characteristic curves of the characteristic having increased likelihood of a successful search by means of the value of the maximum of the correlation function or of the magnitude of the correlation function between the first and second characteristic curves of the characteristic having increased likelihood of a successful search, a discontinuity corresponding to a lack of information values of the first information signal relative to the second information signal, or vice versa, between two successive sampling times.

10. Apparatus as claimed in claim 8 or 9, wherein the means (130) for determining the information for temporal alignment is further configured to subdivide the first characteristic curve of the characteristic having increased likelihood of a successful search within the respective comparison time window ($M_{j,deg}$; $S_{j,k,deg}$) instead of the discontinuity determined into two smaller comparison time windows, respectively, and to again perform an alignment with regard to the smaller comparison time windows.

11. Apparatus as claimed in any of the previous claims, further comprising:

    a means for temporally aligning, in more detail, the first ($S_{deg}(t)$) and second ($S_{ref}(t)$) information signals within the respective comparison time window ($S_{j,k,deg}$) on the basis of the information for temporal alignment on the basis of similarities between the first ($M_{j,deg}$) and second ($M_{j,ref}$) characteristic curves of the characteristic having increased likelihood of a successful search.

12. Apparatus as claimed in claim 11, wherein the means for temporally aligning, in more detail, is configured to perform a more detailed temporal alignment by means of block matching or SAD algorithms or correlation algorithms or by means of a phase correlation within a time period predefined by the information for temporal alignment.

13. Apparatus as claimed in any of the previous claims, further comprising:

> an evaluation means for evaluating a transmission quality of a transmission between the first ($S_{deg}$(t)) and second ($S_{ref}$(t)) information signals on the basis of the information for temporal alignment.

14. A method, implemented in hardware or software, of determining information in order to temporally align a first information signal ($S_{deg}$(t)) and a second information signal ($S_{ref}$(t)), each of which comprises one or several information values for successive sampling times, the method comprising:

> extracting characteristics ($M_{i,j,deg}$) of a plurality of characteristics per sampling time or per subsequence of sampling times of the successive sampling times from the first information signal ($S_{deg}$(t)) so as to obtain, for each characteristic, a first characteristic curve ($M_{j,deg}$) which is subdivided into a sequence of comparison time windows, and for extracting the characteristics ($M_{i,j,ref}$) per sampling time or per subsequence of sampling times of the successive sampling times from the second information signal ($S_{ref}$(t)) so as to obtain, for each characteristic, a second characteristic curve ($M_{j,ref}$),
> selecting, for each comparison time window, from the characteristics a characteristic having increased likelihood of a successful search which comprises characteristic properties which by comparison with characteristic properties of the other characteristics indicate an increased likelihood of a successful search in the search for the first characteristic curve ($M_{j,deg}$; $M_{j,ref}$) within the respective comparison time window in the second characteristic curve, specifically with a spread range of the characteristic or a magnitude of a maximum of a measure of similarity between the first and second characteristic curves as a measure of the likelihood of a successful search of the respective characteristic is utilized; and
> determining the information for temporal alignment on the basis of similarities between the first ($M_{j,deg}$) and second ($M_{j,ref}$) characteristic curves of the characteristic having increased likelihood of a successful search for the respective comparison time window by means of a search for the first characteristic curve ($M_{j,deg}$; $M_{j,ref}$) of the characteristic having increased likelihood of a successful search within each of the plurality of comparison time windows in the second characteristic curve of the characteristic having increased likelihood of a successful search.

15. A computer program comprising a program code for performing the method of determining information in order to temporally align a first information signal and a second information signal as claimed in claim 14, when the computer program runs on a computer.

**Revendications**

1. Dispositif (110) pour déterminer des informations sur l'alignement dans le temps d'un premier signal d'informations ($s_{deg}$(t)) et d'un deuxième signal d'informations ($s_{ref}$(t)) qui présentent, chacun, pour des moments de balayage successifs une ou plusieurs valeurs d'informations, avec

> un moyen d'extraction de caractéristiques (120) destiné à extraire du premier signal d'informations ($s_{deg}$(t)) des caractéristiques ($\mathbf{M}_{i,j,deg}$) d'une pluralité de caractéristiques par moment de balayage ou par succession partielle de moments de balayage, pour obtenir, par caractéristique, une première évolution de caractéristique ($\mathbf{M}_{j,deg}$) qui est subdivisée en une succession de fenêtres de temps de comparaison, et pour extraire du deuxième signal d'informations ($S_{ref}$(t)) les caractéristiques ($\mathbf{M}_{i,j,ref}$) par moment de balayage ou par succession partielle de moments de balayage successifs, pour obtenir, par caractéristique, une deuxième évolution de caractéristique ($\mathbf{M}_{j,ref}$),
> le moyen d'extraction de caractéristiques (120) étant réalisé pour sélectionner parmi les caractéristiques, par fenêtre de temps de comparaison, une caractéristique à probabilité de succès de recherche accrue présentant des propriétés de caractéristique indiquant, comparé aux propriétés de caractéristique des autres caractéristiques, une probabilité de succès de recherche accrue lors de la recherche de la première évolution de caractéristique ($\mathbf{M}_{j,deg}$; $\mathbf{M}_{j,ref}$) dans la fenêtre de temps de comparaison respective dans la deuxième évolution de caractéristique, et ce avec soit une largeur de dispersion de la caractéristique, soit une quantité d'un maximum d'une mesure de similitude entre la première et la deuxième évolution de la caractéristique comme mesure de probabilité de succès de recherche de la caractéristique respective; et
> un moyen (130) destiné à déterminer les informations sur l'alignement dans le temps sur base de similitudes entre la première ($\mathbf{M}_{j,deg}$) et la deuxième évolution de caractéristique ($\mathbf{M}_{j,ref}$) de la caractéristique à probabilité de succès de recherche accrue par une recherche de la première évolution de la caractéristique à probabilité de succès de recherche accrue dans chacune de la pluralité de fenêtres de temps de comparaison dans la deuxième évolution de la caractéristique à probabilité de succès de recherche accrue.

2. Dispositif selon la revendication 1, dans lequel le moyen d'extraction de caractéristique (120) est adapté pour utiliser, comme mesure de dispersion pour la largeur de dispersion, la variance ou l'écart standard.

3. Dispositif selon la revendication 1, dans lequel le moyen d'extraction de caractéristique est réalisé pour utiliser une fonction de corrélation comme mesure de similitude.

4. Dispositif selon l'une des revendications précédentes, dans lequel le premier ($s_{deg}(t)$) et le deuxième signal d'informations ($s_{ref}(t)$) sont, chacun, un signal vidéo numérique qui présente, comme pluralité de valeurs d'informations par moment de balayage, les valeurs de pixel d'une image vidéo, et chacune de la pluralité de caractéristiques ($M_{i,j,deg}$; $M_{i,j,ref}$) correspondant, chacune, à une part de déplacement d'une zone d'image entre deux images vidéo successives ou d'informations de luminosité, de couleur, de contraste ou de bords dans une découpe d'image ou sur les images vidéo complètes.

5. Dispositif selon l'une des revendications précédentes, dans lequel le moyen d'extraction de caractéristique (120) est réalisé de sorte qu'un ensemble de la pluralité de caractéristiques ($M_{i,j,deg}$; $M_{i,j,ref}$) par moment de balayage ou par succession partielle de moments de balayage soit moins volumineux qu'un ensemble des valeurs d'informations du premier ($s_{deg}(t)$) ou du deuxième signal d'informations ($s_{ref}(t)$) par moment de balayage ou par succession partielle de moments de balayage desquels ils sont extraits.

6. Dispositif selon l'une des revendications précédentes, dans lequel le moyen (130) pour déterminer les informations sur l'alignement dans le temps est réalisé pour déterminer les similitudes entre la première ($M_{j,deg}$; $S_{j',k',deg}$) et la deuxième évolution de caractéristique ($M_{j,ref}$; $S_{j',k',ref}$) de la caractéristique à probabilité de succès de recherche accrue à l'aide d'une fonction de corrélation entre la première et la deuxième évolution de caractéristique de la caractéristique à probabilité de succès de recherche accrue.

7. Dispositif selon la revendication 6, dans lequel une position du maximum de la fonction de corrélation entre la première ($M_{j·deg}$; $Sj_{',k',deg}$) et la deuxième évolution ($M_{j·ref}$; $Sj_{',k',ref}$) de la caractéristique à probabilité de succès de recherche accrue signifie un décalage dans le temps des deux évolutions de caractéristique entre elles.

8. Dispositif selon l'une des revendications 6 ou 7, dans lequel le moyen (130) pour déterminer les informations sur l'alignement dans le temps est réalisé pour déterminer une discontinuité de la première ($M_{j·deg}$; $Sj_{',k',deg}$) ou de la deuxième évolution de caractéristique ($Mj_{·ref}$; $Sj_{,k,ref}$) de la caractéristique à probabilité de succès de recherche accrue par une présence de multiples maximums de la fonction de corrélation entre la première et la deuxième évolution de caractéristique de la caractéristique à probabilité de succès de recherche accrue, une discontinuité correspondant à un défaut de valeurs d'informations du premier par rapport au deuxième signal d'informations, ou inversement, entre deux moments de balayage successifs.

9. Dispositif selon l'une des revendications 6 ou 7, dans lequel le moyen (130) pour déterminer les informations sur l'alignement dans le temps est réalisé pour déterminer une discontinuité de la première ($M_{j,deg}$; $S_{j',k',deg}$) ou de la deuxième évolution de caractéristique ($M_{j,ref}$; $Sj_{,k,ref}$) de la caractéristique à probabilité de succès de recherche accrue par la valeur du maximum de la fonction de corrélation ou de la quantité de la fonction de corrélation entre la première et la deuxième évolution de caractéristique de la caractéristique à probabilité de succès de recherche accrue, une discontinuité correspondant à un défaut de valeurs d'informations du premier par rapport au deuxième signal d'informations, ou inversement, entre deux moments de balayage successifs.

10. Dispositif selon la revendication 8 ou 9, dans lequel le moyen (130) pour déterminer les informations sur l'alignement dans le temps est par ailleurs réalisé pour diviser la première évolution de caractéristique de la caractéristique à probabilité de succès de recherche accrue dans la fenêtre de temps de comparaison respective ($M_{j,deg}$; $S_{j',k',deg}$) à l'endroit de la discontinuité déterminée en chaque fois deux fenêtres de temps de comparaison plus petites et pour réaliser à nouveau un alignement par rapport aux fenêtres de temps de comparaison plus petites.

11. Dispositif selon l'une des revendications précédentes, présentant par ailleurs la caractéristique suivante:

un moyen destiné à l'alignement dans le temps détaillé du premier ($s_{deg}(t)$) et du deuxième ($s_{ref}(t)$) signal d'informations dans la fenêtre de temps de comparaison respective ($S_{j',k',deg}$) sur base de l'information sur l'alignement dans le temps sur base de similitudes entre la première ($M_{j·deg}$) et la deuxième évolution de caractéristique ($M_{j·ref}$) de la caractéristique à probabilité de succès de recherche accrue.

**12.** Dispositif selon la revendication 11, dans lequel le moyen destiné à l'alignement dans le temps détaillé est réalisé pour effectuer un alignement dans le temps détaillé à l'aide d'algorithmes de coïncidence de blocs ou de SAD ou de corrélation ou à l'aide d'une corrélation de phases dans un laps de temps qui est prédéterminé par l'information sur l'alignement dans le temps.

**13.** Dispositif selon l'une des revendications précédentes, présentant par ailleurs la caractéristique suivante:

un moyen d'évaluation destiné à évaluer une qualité de transmission d'un transmission entre le premier ($s_{deg}$(t)) et le deuxième signal d'informations ($S_{ref}$(t)) sur base de l'information sur l'alignement dans le temps.

**14.** Procédé, mis en oeuvre en matériel ou en logiciel, pour déterminer les informations sur l'alignement dans le temps d'un premier signal d'informations ($s_{deg}$(t)) et d'un deuxième signal d'informations ($s_{ref}$(t)) qui présentent, chacun, pour des moments de balayage successifs une ou plusieurs valeurs d'informations, aux étapes suivantes consistant à:

extraire du premier signal d'informations ($s_{deg}$(t)) les caractéristiques ($\mathbf{M}_{i,j,deg}$) d'une pluralité de caractéristiques par moment de balayage ou par succession partielle des moments de balayage successifs, pour obtenir, par caractéristique, une première évolution de caractéristique ($\mathbf{M}_{j,deg}$) qui est subdivisée en une succession de fenêtres de temps de comparaison, et extraire du deuxième signal d'informations ($S_{ref}$(t)) les caractéristiques ($\mathbf{M}_{i,j,ref}$) par moment de balayage ou par succession partielle des moments de balayage successifs, pour obtenir, par caractéristique, une deuxième évolution de caractéristique ($\mathbf{M}_{j,ref}$),
par fenêtre de temps de comparaison, sélectionner une caractéristique à probabilité de succès de recherche accrue présentant des propriétés de caractéristique qui indiquent, comparé aux propriétés de caractéristique des autres caractéristiques, une probabilité de succès de recherche accrue lors de la recherche de la première évolution de caractéristique ($\mathbf{M}_{j \cdot deg}$; $\mathbf{M}_{j,ref}$) dans la fenêtre de temps de comparaison respective dans la deuxième évolution de caractéristique, et ce avec une largeur de dispersion de la caractéristique ou une quantité d'un maximum d'une mesure de similitude entre la première et la deuxième évolution de caractéristique de la caractéristique qui est utilisée comme mesure pour la probabilité de succès de recherche de la caractéristique respective; et
déterminer les informations sur l'alignement dans le temps sur base de similitudes entre la première ($\mathbf{M}_{j \cdot deg}$) et la deuxième évolution de caractéristique ($\mathbf{M}_{j,ref}$) de la caractéristique à probabilité de succès de recherche accrue pour la fenêtre de temps de comparaison respective par recherche de la première ($\mathbf{M}_{j \cdot deg}$; $\mathbf{M}_{j,ref}$) de la caractéristique à probabilité de succès de recherche accrue dans chacune de la pluralité de fenêtres de temps de comparaison dans la deuxième évolution de caractéristique de la caractéristique à probabilité de succès de recherche accrue.

**15.** Programme d'ordinateur avec un code de programme pour réaliser le procédé pour déterminer des informations sur l'alignement dans le temps d'un premier signal d'informations et d'un deuxième signal d'informations selon la revendication 14 lorsque le programme d'ordinateur est exécuté sur un ordinateur.

FIGUR 1

# FIGUR 2

EP 2 064 898 B1

FIGUR 3

FIGUR 4

FIGUR 5

EP 2 064 898 B1

UNTERTEILEN DES 1. UND 2. INFORMA-
TIONSSIGNALS IN UNTEREINHEITEN — S1

EXTRAHIEREN VON WENIGSTENS EINEM
MERKMAL PRO UNTEREINHEIT DER
INFORMATIONSSIGNALE — S2

UNTERTEILUNG DER UNTEREINHEITEN
UND IHRER MERKMALE IN SUCHMUSTER
BZW. VERGLEICHSZEITFENSTER
(WENIGSTENS EIN SIGNAL) — S3

BESTIMMEN DER INFO ZUR ZEITLICHEN
AUSRICHTUNG BASIEREND AUF
ÄHNLICHKEITEN ZWISCHEN DEM
1. UND 2. MERKMALSVERLAUF — S4

NUTZUNG DER ZEITLICHEN INFO ZUR
WEITEREN, DETAILLIERTEREN
ZEITLICHEN AUSRICHTUNG — S5

FIGUR 6

FIGUR 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- PVQM - A perceptual video quality measure. **A.P. HEKSTRA et al.** Signal Processing: Image Communications. Elsevier, 2002, vol. 17, 781-798